(19) Europäisches Patentamt
European Patent Office
Office européen des brevets

(11) Veröffentlichungsnummer : **0 129 813**
**B1**

(12) **EUROPÄISCHE PATENTSCHRIFT**

(45) Veröffentlichungstag der Patentschrift : 11.11.87

(51) Int. Cl.⁴ : **C 09 D 3/80**, C 08 G 18/40, C 08 G 18/62, C 08 G 18/79, C 08 G 18/72, C 09 D 3/72

(21) Anmeldenummer : **84106929.7**

(22) Anmeldetag : **16.06.84**

(54) **Verfahren zur Herstellung von Überzügen.**

(30) Priorität : **24.06.83 DE 3322830**

(43) Veröffentlichungstag der Anmeldung : **02.01.85 Patentblatt 85/01**

(45) Bekanntmachung des Hinweises auf die Patenterteilung : **11.11.87 Patentblatt 87/46**

(84) Benannte Vertragsstaaten : **AT BE CH DE FR GB IT LI NL SE**

(56) Entgegenhaltungen :
**EP-A- 0 036 975**
**EP-A- 0 039 797**
**EP-A- 0 047 452**
**EP-A- 0 075 206**
**EP-A- 0 099 011**

(73) Patentinhaber : **BASF Aktiengesellschaft**
**Carl-Bosch-Strasse 38**
**D-6700 Ludwigshafen (DE)**

(72) Erfinder : **Lenz, Werner, Dr.**
**Heinrich-Baermann-Strasse 14**
**D-6702 Bad Duerkheim (DE)**
Erfinder : **Sander, Hans, Dr.**
**Petersstrasse 2**
**D-6700 Ludwigshafen (DE)**
Erfinder : **Moeller, Dieter**
**Berentrup 5**
**D-4715 Ascheberg (DE)**

**EP 0 129 813 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein Verfahren zur Herstellung von Überzügen unter Verwendung von Beschichtungsmitteln, welche als Bindemittel Umsetzungsprodukte von ausgewählten Polyhydroxypolyacrylatharzen und Polyesterolen als Polyolgemisch mit Isocyanurat- und gegebenenfalls Biuretgruppen aufweisenden, gegebenenfalls teilweise oder vollständig mit CH-, NH- oder OH-aciden Blockierungsmitteln verkappten Polyisocyanaten einer Funktionalität zwischen 2,5 und 6, mit vorwiegend cycloaliphatisch gebundenen Isocyanatgruppen enthalten.

In der DE-A 17 20 265 ist ein Verfahren zur Herstellung von lichtbeständigen Überzügen auf der Basis von Umsetzungsprodukten von Polyhydroxypolyacrylatharzen, hergestellt durch Copolymerisation von Monoestern der Acrylsäure und/oder Methacrylsäure mit polyfunktionellen aliphatischen Alkoholen, Estern der Acrylsäure und/oder Methacrylsäure mit monofunktionellen aliphatischen Alkoholen und/oder anderen copolymerisierbaren olefinisch ungesättigten Monomeren in organischer Lösung beschrieben. Die hier angegebenen Bindemittelkombinationen aus hydroxylgruppenhaltigen Acrylatharzen mit biuretisiertem Triisocyanat ergeben hochglänzende, bei niedrigen Temperaturen rasch kratzfest aushärtende, elastische pigmentierte Lackfilme hervorragender Witterungsstabilität. Ein Nachteil dieser Lackmischungen ist allerdings die Tatsache, daß die eingesetzten biuretisierten Triisocyanate aufgrund ihrer Tendenz zur Rückspaltung in die zugrundeliegenden monomeren Diisocyanate und darüber hinaus ihrer ausgeprägten Inhalationstoxizität in Form von Sprühnebeln gewerbehygienisch nicht unbedenklich sind.

Aus der DE-B 16 69 008 ist die Verwendung eines Gemisches aus einem hydroxylgruppenhaltigen Copolymerisat auf der Basis von Methylmethacrylat, Vinylaromaten, Monoacrylaten und/oder -methacrylaten von Alkanolen, anderen copolymerisierbaren olefinisch ungesättigten Monomeren, Monomeren mit mindestens einer Hydroxylgruppe im Molekül und eines tertiäre Aminogruppen enthaltenden Monomeren und wenigstens einem Polyisocyanat in organischer Lösung als Lack bekannt. Diese Lackmischungen ergeben harte, kratzfeste, schlagzähe, witterungsstabile, gut haftende, gegen Wasser, Lösungsmittel und Chemikalien beständige Filme von hohem Glanz. Als Härter werden hier u. a. urethan-, isocyanurat- und biuretgruppenhaltige aromatische oder aliphatische Polyisocyanate aufgeführt. Es findet sich jedoch kein Hinweis auf isocyanurathaltige, gewerbehygienisch weitgehend unbedenkliche Polyisocyanate mit vorwiegend cycloaliphatisch gebundenen Isocyanatgruppen. Als tertiäre Aminogruppen enthaltende Monomere werden solche mit aliphatischen tertiären Aminogruppen hoher Basizität erwähnt. Hierdurch wird zwar die Reaktion zwischen Polyisocyanat und Polyol beschleunigt, andererseits ist aber eine relativ geringe Säurebeständigkeit und eine starke Vergilbungsneigung der Lackfilme bei Bewitterung zu erwarten.

In den DE-B 16 68 510, DE-A 24 60 329, DE-B 20 54 239, DE-B 26 03 259, DE-B 26 26 900, DE-B 26 59 853 und DE-A 28 51 613 sind ebenfalls Verfahren zur Herstellung von in organischer Lösung vorliegenden hydroxylgruppenhaltigen Copolymerisaten und zur Herstellung von Überzügen aus Bindemitteln auf Basis dieser Copolymerisate in Kombination mit aliphatischen biuretisierten Triisocyanaten beschrieben. Für die genannten Copolymerisate kommen als hydroxylgruppenhaltige Acrylatmonomere Umsetzungsprodukte von Acrylsäure und/oder Methacrylsäure mit dem Glycidylester einer verzweigten aliphatischen Carbonsäure mit 4 bis 26 C-Atomen und gegebenfalls Hydroxyalkylacrylate oder -methacrylate mit 2 bis 4 C-Atomen in der Alkylkette, als Comonomere Acrylsäure- und/oder Methacrylsäureester von Alkanolen mit 1 bis 12 C-Atomen und Styrol oder Alkylstyrol zum Einsatz. Die Einführung der seitenständigen Hydroxylgruppen über den Glycidylester erfolgt hierbei durch Einpolymerisieren von Acrylsäure und/oder Methacrylsäure und gleichzeitiger Veresterung der Carboxylgruppen mit der Glycidylverbindung.

Aus diesen Bindemittelkombinationen lassen sich ebenfalls hochglänzende, rasch härtende, kratzfeste, wasserfeste und elastische Lackfilme hoher Witterungsstabilität herstellen. Nachteilig ist aber wiederum die Tatsache, daß auch hierfür die obengenannten gewerbehygienisch nicht völlig unbedenklichen biuretisierten Triisocyanate verwendet werden.

In der DE-A 28 36 612 wird ein Verfahren zur Herstellung von Überzügen auf Basis von Bindemitteln aus biuret-, urethan- oder isocyanuratgruppenhaltigen Lackpolyisocyanaten und hydroxylgruppenhaltigen Acrylatcopolymerisaten aus Hydroxyalkylacrylaten oder -methacrylaten mit 2 bis 4 C-Atomen im Hydroxyalkylrest, gegebenenfalls substituiertem Styrol und/oder Methylmethacrylat, Acrylsäure- und/oder Methacrylsäureester mit 1 bis 12 C-Atomen im Alkoholrest, gegebenenfalls $\alpha$,$\beta$-monoolefinisch ungesättigter Mono- oder Dicarbonsäure und Acryl- und/oder Methacrylnitril beschrieben. Die Vorteile dieses Verfahrens liegen vor allem darin, daß diese Bindemittelkombinationen sowohl klare, gut verträgliche Lackmischungen als auch glänzende, schnell trocknende, harte und ausreichend elastische Lackfilme ergeben, wobei die Realisierung dieser vorteilhaften anwendungstechnischen Eigenschaften, speziell der guten Verträglichkeit mit Isocyanuratgruppen enthaltenden Polyisocyanaten, zwingend die Verwendung von 5 bis 30 Gew.% Acrylnitril und/oder Methacrylnitril als Comonomere im hydroxylgruppenhaltigen Acrylatharz erfordert. Der Einsatz solcher nitrilgruppenhaltiger Copolymerisate in Polyurethan-Zweikomponenten-Lacken führt jedoch bei länger andauernder thermischer Belastung zu deutlicher Vergilbung und bei Bewitterung zur Kreidung der pigmentierten Lackfilme. In der Beschreibung ist auch erwähnt, daß als eines der bevorzugten Lackpolyisocyanate u. a. ein Isocyanuratgruppen aufweisendes Polyisocyanat auf Basis von IPDI, d. h. mit vorwiegend cycloaliphatisch gebundenen Isocyanatgruppen, in Kombination mit den Acrylatharzen eingesetzt werden kann. Derartige Bindemittelkombinationen sind aber weder in den Beispielen beschrieben, noch finden sich in der Beschreibung der DE-A 28 36 612 irgendwelche Hinweise auf die Elastizität, den Härteanstieg in Abhängigkeit von der Zeit, sowie insbesondere die für den Einsatz in der Automobilreparaturlackierung äußerst wichtige Superbenzinfestigkeit der Lackfilme nach einer bestimmten Härtungsdauer.

Der DE-A 29 00 592 sind Umsetzungsprodukte aus Glycidylgruppen enthaltenden Acrylatharzen und hydroxylgruppenhaltigen sekundären Monoaminen zu entnehmen, wobei die Acrylatharze aus Glycidylacrylat und/oder -methacrylat, Vinylaromaten, Methylmethacrylat, Acrylnitril, Methacrylnitril, Acrylsäureestern mit 1 bis 12 und/oder Methacrylsäureestern mit 2 bis 12 C-Atomen im Alkoholrest, gegebenenfalls Hydroxyalkylacrylaten und/oder -methacrylaten mit 2 bis 4 C-Atomen im Hydroxyalkylrest und gegebenenfalls α,β-monoolefinisch ungesättigten Mono- und/oder Dicarbonsäuren statistisch copolymerisiert sind und als Vernetzungskomponenten in Kombination mit Polyisocyanaten, die auch Isocyanuratgruppen aufweisen können, verwendet werden. Die in dieser Anmeldung beanspruchte Acrylatharzkomponente beinhaltet also als funktionelle Gruppen außer vorwiegend sekundären Hydroxylgruppen zwingend tertiäre Aminogruppen. Neben der guten Verträglichkeit dieser Bindemittelkombinationen mit aromatischen Lösungsmitteln werden vor allem die trotz der anwesenden tertiären Aminogruppen überraschend hohen Standzeiten hervorgehoben. Wie für den Fachmann leicht einzusehen, sind diese hohen Standzeiten der Lackmischungen vor allem darauf zurückzuführen, daß die Acrylatharze fast ausschließlich sekundäre Hydroxylfunktionen als reaktive Gruppen enthalten. Daher ist es auch keineswegs überraschend, daß das im Vergleichsbeispiel beschriebene entsprechende Umsetzungsprodukt auf Basis von Diethanolamin, welches primäre Hydroxylgruppen enthält, gegenüber den in dieser DE-A beschriebenen Copolymerisaten mit Polyisocyanaten zu geringe Topfzeiten ergibt. Nach dem hier beschriebenen Verfahren ist es also nicht möglich, für Zweikomponenten-Polyurethanlacke gut brauchbare Acrylatharze, die größere Mengen primärer Hydroxylgruppen neben tertiären Aminogruppen enthalten, zu erhalten. Darüberhinaus besitzen Bindemittel, die stark basische aminogruppenhaltige Copolymerisate aufweisen, die Nachteile einer geringeren — z. B. für Automobilreparaturdecklacke aber dringend erforderlichen — Säurebeständigkeit, sowie starker Vergilbung bei längerer Bewitterung im Vergleich zu aminogruppenfreien Systemen.

Die DE-A 30 10 719 betrifft ein Verfahren zur Herstellung von Metalleffektlackierungen verbesserter Witterungsstabilität unter Verwendung von Klarlacken als Decklacke, deren Bindemittel im wesentlichen als Polyolkomponente zwingend aromatenarme Polyesterole und gegebenenfalls Polyacrylatpolyole, als Polyisocyanatkomponente biuret- und/oder isocyanuratgruppenhaltige Addukte mit aliphatischen, gegebenenfalls blockierten Isocyanatgruppen enthalten. Die hierin beschriebenen Klarlacke zeichnen sich speziell durch hohe Rißbeständigkeit bei Bewitterung aus. Der Beschreibung ist allerdings zu entnehmen, daß die Mischungen vorzugsweise dann einzusetzen sind, wenn die Lackhärtung unter Hitzeeinwirkung erfolgt, da bei diesen Bedingungen homogene, klare Lackfilme erhalten werden (vgl. Beispiel 6; Einbrenntemperatur: 80 °C). Besonders gut für den Automobilreparatursektor geeignete Lacke müssen aber auch problemlos bei Raumtemperatur härtbar sein und in diesem Fall homogene Beschichtungen ergeben. Ein weiterer allgemeiner Nachteil der in dieser Anmeldung beschriebenen Kombinationen aus aromatenarmen Polyesterpolyolen und Polyisocyanaten ist die relativ langsame Antrocknung und Durchtrocknung solcher Systeme bei Raumtemperatur im Vergleich zu den rasch superbenzinfest trocknenden Polyacrylatpolyol/Polyisocyanat-Kombinationen. Die in den Beispielen der DE-OS 30 10 719 angeführten Lackmischungen werden demnach sämtlich nur bei 80 °C, d. h. bei erhöhter Temperatur, ausgehärtet.

Die DE-A 30 27 776 bezieht sich auf ein Verfahren zur Herstellung hydroxylgruppenhaltiger, mit ε-Caprolacton modifizierter und mit Polyisocyanaten vernetzbarer (Meth)acrylatharze. Diese Copolymerisate ergeben auch in Kombination mit isocyanuratgruppenhaltigem Polyisocyanat auf Basis von Isophorondiisocyanat — mit vorwiegend cycloaliphatisch gebundenen Isocyanatgruppen — harte, witterungsstabile, gut auf Metall haftende, elastische, wasser- und chemikalienbeständige Überzüge. Die hier beschriebenen Systeme haben allerdings den Nachteil, daß sie im Falle der Verwendung cycloaliphatischer Polyisocyanate bei hohen Temperaturen (zwischen 110 und 150 °C) eingebrannt werden müssen, d. h. für die Automobilreparaturlackierung nicht in Frage kommen.

Im Gegensatz zu den bisher vorzugsweise in Automobilreparaturdecklacken eingesetzten biuretisierten aliphatischen Polyisocyanaten zeigen isocyanuratgruppenhaltige Polyisocyanate mit vorwiegend cycloaliphatisch gebundenen Isocyanatgruppen, vorzugsweise durch Trimerisierung von 3-Isocyanatomethyl-3,5,5-trimethyl-cyclohexylisocyanat (= Isophorondiisocyanat) gemäß der GB-A 1 391 066, DE-A 23 25 826 und 27 32 662 hergestellte Produkte, auch in Form von Aerosolen, nur eine äußerst geringe Inhalationstoxizität, was für die Verwendung bei der Automobilreparaturlackierung von großem Vorteil ist.

Auch Kombinationen aus cycloaliphatischen isocyanuratgruppenhaltigen Polyisocyanaten und Biuret- und/oder isocyanuratgruppenhaltigen Polyisocyanaten mit aliphatisch gebundenen Isocyanatgruppen in untergeordneten Mengen, vorzugsweise auf Basis von Hexamethylendiisocyanat ergeben immer noch gewerbehygienisch wesentlich günstigere Eigenschaften als etwa reine biuretisierte aliphatische Polyisocyanate. Das gleiche gilt etwa auch für die in der DE-A 30 33 860 beschriebenen

Polyisocyanate, die durch Trimerisierung von Mischungen aus 3-Isocyanatomethyl-3,5,5-trimethyl-cyclohexylisocyanat und Hexamethylendiisocyanat in untergeordneten Mengen hergestellt werden. Die genannten Polyisocyanate ergeben alle in Kombinationen mit geeigneten Polyolen Lackfilme hoher Witterungsstabilität und Vergilbungsresistenz.

Werden die dem Stand der Technik entsprechenden hydroxylgruppenhaltigen Polyacrylatharze, wie sie etwa in den oben genannten Anmeldungen DE-B 16 69 008, DE-B 16 68 510, DE-A 24 60 329, DE-B 20 54 239, 26 03 259, 26 26 900, 26 59 853 und DE-A 28 51 613 beschrieben sind, d. h. auf Basis von Hydroxyalkylacrylaten und/oder -methacrylaten mit 2 bis 3 C-Atomen in der Hauptkette des Alkoholrestes, gegebenenfalls kombiniert mit Addukten von Glycidylestern einer verzweigten aliphatischen Monocarbonsäure an Acrylsäure und/oder Methacrylsäure, mit diesen Isocyanuratgruppen enthaltenden cycloaliphatischen Polyisocyanaten kombiniert, so erhält man hieraus bei allen für Automobilreparaturlackierungen üblichen Härtungstemperaturen zwischen Raumtemperatur und 80 °C Lackfilme mit unzureichenden mechanischen Eigenschaften und teilweise nicht ausreichender Superbenzinfestigkeit innerhalb praxisüblicher Härtungsdauern. Bei Verwendung von Acrylatharzen mit hohen Hydroxylzahlen (> 100) und vorwiegend aus Monomeren, die Homopolymerisate hoher Glasübergangstemperatur (> 20 °C) ergeben, erhält man bei praxisüblichen Härtungsbedingungen (etwa 7 d/Raumtemperatur oder maximal 30 bis 60 min/80 °C) zwar Lackfilme ausreichender Kratzfestigkeit und in einigen Fällen genügender Benzinfestigkeit, die andererseits aber viel zu spröde sind, d. h. also den Praxisanforderungen nicht genügen. Der Einsatz von Acrylatharzen niedrigerer Hydroxylzahlen (< 100) mit hohen Anteilen an Monomerbausteinen, die Homopolymerisate niedriger Glasübergangstemperatur (< 5 °C) ergeben, führt entsprechend zu Lackfilmen zwar ausreichender Flexibilität, aber für die Praxis zu geringer Kratzfestigkeit und Superbenzinfestigkeit. Verwendung größerer Katalysatormengen ergibt zwar zum Teil Filme sowohl verbesserter Flexibilität als auch Kratzfestigkeit, die aber noch nicht genügend rasch benzinfest aushärten. Darüberhinaus zeigen die entsprechenden Lackmischungen zu kurze Topfzeiten.

Zweikomponentenlacke aus den in der DE-A 17 20 265 beschriebenen Polyhydroxypolyacrylatharzen und isocyanurathaltigen cycloaliphatischen Polyisocyanaten führen ähnlich wie die obengenannten Kombinationen zu Filmen nicht ausreichender Elastizität. Bei Kombination der in der DE-A 28 36 612 beschriebenen Polyhydroxypolyacrylate, die zwingen Nitrilseitengruppen enthalten, mit Isocyanuratgruppen und vorwiegend cycloaliphatisch gebundene Isocyanatgruppen aufweisenden Polyisocyanaten erhält man, wie oben erwähnt, für Automobilreparaturdecklacke nicht brauchbare Lackschichten zu starker Vergilbungstendenz und nicht ausreichender Witterungsstabilität. Die in der DE-A 29 00 592 beanspruchten, gleichzeitig zwingend Hydroxyl- und tertiäre Aminogruppen aufweisenden Acrylatharze zeigen in Kombination mit diesen Polyisocyanaten, wie oben erwähnt, vor allem Probleme bezüglich ausreichender Säurestabilität der Lackfilme.

Die der DE-A 30 10 719 und der DE-A 30 27 776 zu entnehmenden Kombinationen aus Polyesterpolyolen, hydroxylgruppenhaltigen Acrylatharzen bzw. mit ε-Caprolacton modifizierten hydroxylgruppenhaltigen Poly(meth)acrylaten einerseits und cycloaliphatischen Polyisocyanaten andererseits sind, wie oben erwähnt, für den Einsatz in Automobilreparaturdecklacken vor allem aufgrund der erforderlichen relativ hohen Einbrenntemperaturen und der langsamen Antrocknung wenig geeignet.

Aufgabe der vorliegenden Erfindung war es daher, ein neues Verfahren zur Herstellung von Überzügen zur Verfügung zu stellen, bei welchem Bindemittel auf Basis isocyanurat-, gegebenenfalls biuretgruppenhaltiger Polyisocyanate einer Funktionalität zwischen 2, 5 und 6, bevorzugt 3 und 5, mit vorwiegend cycloaliphatisch gebundenen Isocyanatgruppen und Hydroxylgruppen aufweisender Polyacrylatharze, kombiniert mit Polyesterolen, als Polyolgemisch in organischer Lösung zum Einsatz kommen, welche nicht die genannten technischen Nachteile besitzen. Dies bedeutet, daß mit Hilfe des erfindungsgemäßen Verfahrens, ausgehend von Lackmischungen genügend langer Topfzeit und hinreichend hoher Festkörpergehalte, bei niedrigen Temperaturen ohne Katalysatorzugabe sehr schnell superbenzinfest härtende, nicht vergilbende Filme gleichzeitig hoher Flexibilität, Kratzfestigkeit und Witterungsstabilität bzw. Kreidungsbeständigkeit ergeben.

Unter Funktionalität im Sinne der vorliegenden Erfindung wird die durchschnittliche Zahl der reaktionsfähigen, gegebenenfalls verkappten Isocyanatgruppen pro Polyisocyanatmolekül verstanden.

Überraschenderweise ließ sich die Aufgabe der Erfindung dadurch lösen, daß Überzüge auf Basis von gegebenenfalls teilweise oder vollständig verkappte, bevorzugt unverkappte, Isocyanurat- und gegebenenfalls Biuretgruppen enthaltenden Polyisocyanaten einer Funktionalität zwischen 2, 5 und 6, bevorzugt 3 bis 5, mit vorwiegend cycloaliphatisch gebundenen Isocyanatgruppen durch Umsetzung mit hydroxylgruppenhaltigen Polyacrylaten spezieller Zusammensetzung und in organischen Lösungsmitteln löslichen Polyesterolen als Polyolgemisch hergestellt werden.

Gegenstand der vorliegenden Erfindung ist ein Verfahren zur Herstellung von Überzügen auf der Basis von Umsetzungsprodukten

(A) eines Gemisches aus

(A1) Polyhydroxypolyacrylatharzen aus Estern der Acrylsäure und/oder Methacrylsäure mit monofunktionellen aliphatischen Alkoholen, Monoestern der Acrylsäure und/oder Methacrylsäure mit polyfunktionellen aliphatischen Alkoholen und anderen copolymerisierbaren olefinisch ungesättigten Monomeren

und

(A2) in organischen Lösungsmitteln löslichen Polyesterpolyolen

mit

(B) gegebenenfalls teilweise oder vollständig mit CH-, NH- oder OH-aciden Blockierungsmitteln verkappten, Isocyanurat- und gegebenenfalls Biuretgruppen aufweisenden Polyisocyanaten einer Funktionalität zwischen 2, 5 und 6,

das dadurch gekennzeichnet ist, daß man als Polyhydroxypolyacrylatharze (A1) 40 bis 99 Gew.% hydroxylgruppenhaltige Copolymerisate aus

a) 6 bis 70 Gew.% mindestens eines Esters der allgemeinen Formel

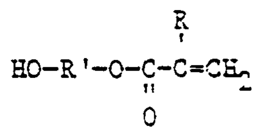

wobei

R für Wasserstoff oder eine Methylgruppe,

R' für einen gerad- oder verzweigtkettigen Alkylenrest mit 2 bis 18 C-Atomen oder einen bis zu drei cycloaliphatische Gruppen enthaltenden Alkylenrest mit 7 bis 17 C-Atomen stehen,

b) 0 bis 50 Gew.% eines oder mehrerer Hydroxyalkylester der Acrylsäure und/oder Methacrylsäure der allgemeinen Formel

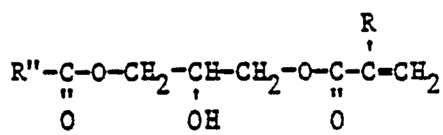

wobei

R für Wasserstoff oder eine Methylgruppe,

R'' für den Alkylrest einer verzweigten aliphatischen Carbonsäure mit 4 bis 26 C-Atomen stehen,

c) 10 bis 50 Gew.% mindestens eines Alkylesters der Acrylsäure und/oder Methacrylsäure, der Homopolymerisate mit Glasübergangstemperaturen von + 5 °C bis + 120 °C bildet,

d) 0 bis 10 Gew.% eines Vinylaromaten,

e) 10 bis 60 Gew.% mindestens eines Alkylesters und/oder bis zu 2 Ethersauerstoffbrücken enthaltenden Alkylglykolesters der Acrylsäure und/oder Methacrylsäure, der Homopolymerisate mit Glasübergangstemperaturen von —80 °C bis + 4,5 °C bildet,

f) 0 bis 10 Gew.% eines Amides der Acrylsäure und/oder Methacrylsäure, das gegebenenfalls am Amidstickstoff einen oder zwei Alkylreste mit 1 bis 8 Kohlenstoffatomen, die gegebenenfalls eine Carbonylgruppe enthalten können, oder einen oder zwei Phenylreste als Substituenten trägt,

g) 1 bis 25 Gew.% mindestens einer polymerisierbaren, olefinisch ungesättigten, heterocyclischen Verbindung der allgemeinen Formeln (I) bis (VIII)

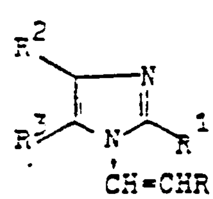

(I)

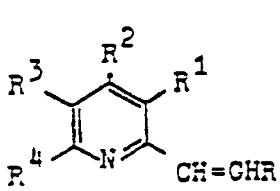

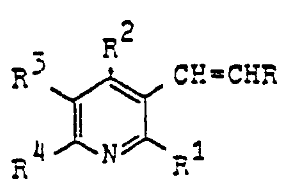

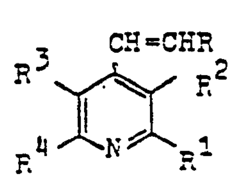

(II) (III) (IV)

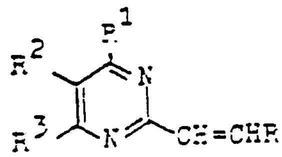

(V)

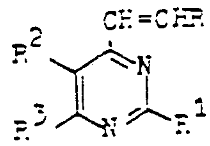

(VI)

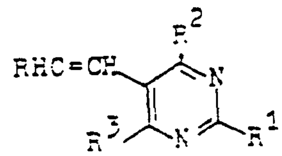

(VII)

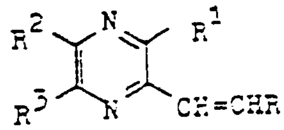

(VIII)

wobei

R für Wasserstoff oder eine Methylgruppe steht,

$R^1$, $R^2$, $R^3$ und $R^4$ untereinander gleich oder verschieden sind und jeweils für Wasserstoff, eine Methyl- oder Ethylgruppe, einen gerad- oder verzweigtkettigen Alkylrest mit 3 bis 4 C-Atomen, einen gegebenenfalls durch eine Alkylgruppe mit 1 bis 4 C-Atomen, durch Halogen oder eine Nitrogruppe substituierten Phenylrest, eine Gruppe der allgemeinen Formel $—R^{I}—A—R^{II}$

worin

A Sauerstoff oder Schwefel,

$R^I$ eine Methylen-, Ethylen- oder gegebenenfalls durch eine Alkylgruppe mit 1 bis 4 C-Atomen, durch Halogen oder eine Nitrogruppe substituierte Phenylengruppe und

$R^{II}$ eine Methyl-, Ethyl- oder gegebenenfalls durch eine Alkylgruppe mit 1 bis 4 C-Atomen, durch Halogen oder eine Nitrogruppe substituierte Phenylgruppe bedeuten, eine Halogen- oder Nitrogruppe, sowie eine Gruppe der allgemeinen Formeln $—OR^{III}$, $—COOR^{III}$, $—SO_2R^{III}$, $—CONR^{III}R^{IV}$ oder $—SO_2NR^{III}R^{IV}$,

worin

$R^{III}$ und $R^{IV}$ untereinander gleich oder verschieden sind und jeweils eine Methyl- oder Ethylgruppe, einen gerad- oder verzweigtkettigen Alkylrest mit 3 bis 4 C-Atomen oder einen gegebenenfalls durch eine Alkylgruppe mit 1 bis 4 C-Atomen, durch Halogen oder eine Nitrogruppe substituierten Phenylrest bedeuten, stehen

und außerdem in den Formeln (I), (II), (III), (V), (VI) und (VIII) $R^2$ und $R^3$ oder in der Formel (III) $R^3$ und $R^4$, in den Formeln (II) und (IV) $R^3$ und $R^4$ oder $R^1$ und $R^2$, sowie in den Formeln (II) und (IV) sowohl $R^3$ und $R^4$ als auch $R^1$ und $R^2$ gemeinsam mit dem Heterocyclus einen anellierten, gegebenenfalls durch eine Alkylgruppe mit 1 bis 4 C-Atomen, durch Halogen oder eine Nitrogruppe substituierten aromatischen Sechsring bilden können,

h) 0 bis 20 Gew.% unter (a) bis (g) nicht genannter Monomerer, deren einpolymerisierte Reste gegenüber Isocyanatgruppen inert sind,

mit der Maßgabe, daß die Summe der unter (a) und (b) genannten Prozentzahlen 6 bis 70, die Summe der unter (c), (d) und (g) genannten Prozentzahlen 11 bis 60 und die Summe der Prozentzahlen der unter (a) bis (h) genannten Komponenten 100 beträgt, als Polyesterpolyole (A2) 1-60 Gew.% in üblichen gegenüber Isocyanaten inerten Lacklösungsmitteln oder Lacklösungsmittelgemischen, die im wesentlichen eine oder mehrere aromatische und/oder Halogen- und/oder Ether- und/oder Ester- und/oder Ketogruppen enthalten, lösliche, Hydroxylgruppen aufweisende Polyester mit Hydroxylzahlen zwischen 30 und 500 sowie Säurezahlen zwischen 0 und 30, wobei diese Polyesterpolyole (A2) noch bis zu 10 Gew.% polyfunktionelle Alkohole mit Molekulargewichten von 62 bis 300 enthalten können,

mit der Maßgabe, daß die Summe der unter (A1) und (A2) genannten Prozentzahlen 100 beträgt und als Isocyanuratgruppen und gegebenenfalls Biuretgruppen aufweisende Polyisocyanate (B) einer Funktionalität zwischen 2, 5 und 6 (B1) 60 bis 100 Gew.% solcher Polyisocyanate, die Isocyanuratgruppen und vorwiegend cycloaliphatisch gebundene Isocyanatgruppen aufweisen und (B2) 0 bis 40 Gew.% Biuretgruppen und/oder Isocyanuratgruppen enthaltender Polyisocyanate mit vorwiegend aliphatisch gebundenen Isocyanatgruppen, mit der Maßgabe, daß die Summe der unter (B1) und (B2) genannten Prozentzahlen 100 beträgt, einsetzt.

Gegenstand der vorliegenden Erfindung sind außerdem Metallteile, die nach dem erfindungsgemäßen Verfahren mit einem Überzug versehen sind.

Zu den für das erfindungsgemäße Verfahren zu verwendenden Umsetzungsprodukten und deren Aufbaukomponenten ist im einzelnen folgendes auszuführen :

(A1) Als Polyhydroxypolyacrylatharze (A1) kommen hydroxylgruppenhaltige Copolymerisate aus :

a) 6 bis 70 Gew.% mindestens eines Esters der allgemeinen Formel

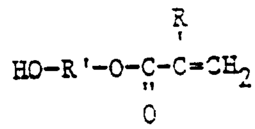

wobei

R für Wasserstoff oder eine Methylgruppe,

R′ für einen gerad- oder verzweigtkettigen Alkylenrest mit 2 bis 18 C-Atomen oder einen bis zu drei cycloaliphatische Gruppen enthaltenden Alkylenrest mit 7 bis 17 C-Atomen stehen,

b) 0 bis 50 Gew.% eines oder mehrerer Hydroxyalkylester der Acrylsäure und/oder Methacrylsäure der allgemeinen Formel

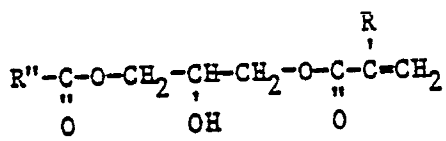

wobei

R für Wasserstoff oder eine Methylgruppe,

R″ für den Alkylrest einer verzweigten aliphatischen Carbonsäure mit 4 bis 26 C-Atomen stehen

c) 10 bis 50 Gew.% mindestens eines Alkylesters der Acrylsäure und/oder Methacrylsäure, der Homopolymerisate mit Glasübergangstemperaturen von + 5 °C bis + 120 °C bildet,

d) 0 bis 10 Gew.% eines Vinylaromaten,

e) 10 bis 60 Gew.% mindestens eines Alkylesters und/oder bis zu 2 Ethersauerstoffbrücken enthaltenden Alkylglykolesters der Acrylsäure und/oder Methacrylsäure, der Homopolymerisate mit Glasübergangstemperaturen von — 80 °C bis + 4,5 °C bildet,

f) 0 bis 10 Gew.% eines Amides der Acrylsäure und/oder Methacrylsäure, das gegebenenfalls am Amidstickstoff einen oder zwei Alkylreste mit 1 bis 8 Kohlenstoffatomen, die gegebenenfalls eine Carbonylgruppe enthalten können, oder einen oder zwei Phenylreste als Substituenten trägt,

g) 1 bis 25 Gew.% mindestens einer polymerisierbaren, olefinisch ungesättigten, heterocyclischen Verbindung der allgemeinen Formeln (I) bis (VIII)

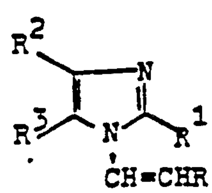

(I)

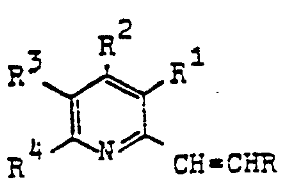

(II)

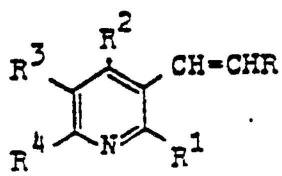

(III)

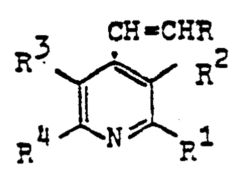

(IV)

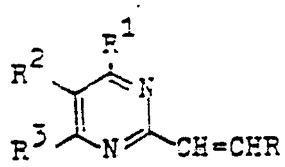

(V)

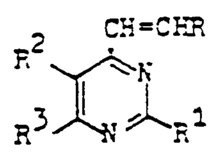

(VI)

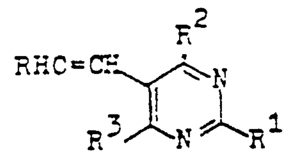

(VII)

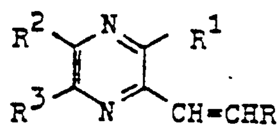

(VIII)

wobei

R für Wasserstoff oder eine Methylgruppe steht,

$R^1$, $R^2$, $R^3$ und $R^4$ untereinander gleich oder verschieden sind und jeweils für Wasserstoff, eine Methyl- oder Ethylgruppe, einen gerad- oder verzweigtkettigen Alkylrest mit 3 bis 4 C-Atomen, einen gegebenenfalls durch eine Alkylgruppe mit 1 bis 4 C-Atomen, durch Halogen oder eine Nitrogruppe substituierten Phenylrest, eine Gruppe der allgemeinen Formel $—R^I—A—R^{II}$

worin

A Sauerstoff oder Schwefel,

$R^I$ eine Methylen-, Ethylen- oder gegebenenfalls durch eine Alkylgruppe mit 1 bis 4 C-Atomen, durch Halogen oder eine Nitrogruppe substituierte Phenylengruppe und

$R^{II}$ eine Methyl-, Ethyl- oder gegebenenfalls durch eine Alkylgruppe mit 1 bis 4 C-Atomen, durch Halogen oder eine Nitrogruppe substituierte Phenylgruppe bedeuten, eine Halogen- oder Nitrogruppe, sowie eine Gruppe der allgemeinen Formeln $—OR^{III}$, $—COOR^{III}$, $—SO_2R^{III}$, $—CONR^{III}R^{IV}$ oder $—SO_2NR^{III}R^{IV}$,

worin

$R^{III}$ und $R^{IV}$ untereinander gleich oder verschieden sind und jeweils eine Methyl- oder Ethylgruppe, einen gerad- oder verzweigtkettigen Alkylrest mit 3 bis 4 C-Atomen oder einen gegebenenfalls durch eine Alkylgruppe mit 1 bis 4 C-Atomen, durch Halogen oder eine Nitrogruppe substituierten Phenylrest bedeuten, stehen

und außerdem in den Formeln (I), (II), (III), (V), (VI) und (VIII) $R^2$ und $R^3$ oder in der Formel (III) $R^3$ und $R^4$, in den Formeln (II) und (IV) $R^3$ und $R^4$ oder $R^1$ und $R^2$, sowie in den Formeln (II) und (IV) sowohl $R^3$ und $R^4$ als auch $R^1$ und $R^2$ gemeinsam mit dem Heterocyclus einen anellierten, gegebenenfalls durch eine Alkylgruppe mit 1 bis 4 C-Atomen, durch Halogen oder eine Nitrogruppe substituierten aromatischen Sechsring bilden können,

h) 0 bis 22 Gew.% unter (a) bis (g) nicht genannter Monomerer, deren einpolymerisierte Reste gegenüber Isocyanatgruppen inert sind,

mit der Maßgabe, daß die Summe der unter (a) und (b) genannten Prozentzahlen 6 bis 70, die Summe der unter (c), (d) und (g) genannten Prozentzahlen 10 bis 60 und die Summe der Prozentzahlen der unter (a) bis (h) genannten Komponenten 100 beträgt, in Frage.

(a) Als Ester der allgemeinen Formel

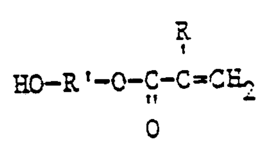

wobei R für Wasserstoff oder eine Methylgruppe, R′ für einen gerad- oder verzweigtkettigen Alkylenrest mit 2 bis 18 C-Atomen oder einen bis zu drei cycloaliphatische Gruppen enthaltenden Alkylenrest mit 7 bis 17 C-Atomen stehen, eignen sich beispielsweise Monoester zweiwertiger Alkohole, wie Decandiol-1,10, Octandiol-1,8, Pentandiol-1,5, 1,4-Dihydroxymethylcyclohexan, 3(4), 8(9)-Dihydroxymethyltricyclo $[5.2.1.0^{2.6}]$-decan, 2,2-Dimethylpropandiol-1,3, Butandiol-1,4, Hexandiol-1,6, Propandiol-1,2 oder Ethandiol-1,2 mit Acrylsäure oder Methacrylsäure z. B. Decandiol-1,10-monoacrylat, Decandiol-1,10-monomethacrylat, Octandiol-1,8-monoacrylat, Octandiol-1,8-monomethacrylat, Pentandiol-1,5-monoacrylat, Pentandiol-1,5-monomethacrylat, 1,4-Dihydroxymethylcyclohexanmonoacrylat, 1,4-Dihydroxymethylcyclohexanmonomethacrylat, 3(4), 8(9)-Dihydroxymethyltricyclo $[5.2.1.0^{2.6}]$ decanmonoacrylat und -monomethacrylat, 2,2-Dimethylpropandiol-1,3-monoacrylat und -monomethacrylat, Butandiol-1,4-monomethacrylat, Hexandiol-1,6-monomethacrylat, 2-Hydroxypropylacrylat, 2-Hydroxypropylmethacrylat sowie vorzugsweise Hydroxyethylacrylat, Hydroxyethylmethacrylat, Butandiol-1,4-monoacrylat oder -monomethacrylat und Hexandiol-1,6-monoacrylat oder -monomethacrylat.

Komponente (a) ist im erfindungsgemäß zu verwendenden Copolymerisat (A1) in einer Menge von 6 bis 70, vorzugsweise 6 bis 50 Gew.% einpolymerisiert.

(b) Als Hydroxyalkylester der Acrylsäure und/oder Methacrylsäure der allgemeinen Formel

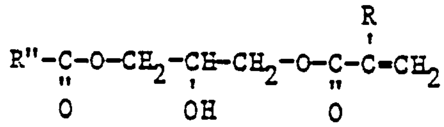

wobei R für Wasserstoff oder eine Methylgruppe und R″ für den Alkylrest einer verzweigten Carbonsäure mit 4 bis 26 C-Atomen stehen, eignen sich z. B. Trimethylessigsäureglycidylester(meth)-acrylat, Versaticsäureglycidylesteracrylat und -methacrylat. Desgleichen eignen sich Gemische der genannten Hydroxyalkylmethacrylate und -acrylate.

Komponente (b) kann in einer Menge von 0 bis 50, vorzugsweise 0 bis 25 Gew.% im Polyhydroxypolyacrylatharz (A1) einpolymerisiert sein. Die Summe der unter (a) und (b) genannten Prozentzahlen beträgt 6 bis 70, vorzugsweise 6 bis 50 Gew.%.

(c) Als Alkylester der Acrylsäure und/oder Methacrylsäure, die Homopolymerisate mit Glasübergangstemperaturen von + 5 °C bis + 120 °C bilden, kommen z. B. in Frage Methylacrylat, Methylmethacrylat, Ethylmethacrylat, tert.-Butylacrylat, n-Butylmethacrylat und i-Butylmethacrylat oder deren Mischungen, wobei Methylmethacrylat und tert.-Butylacrylat bevorzugt sind.

Komponente (c) ist im erfindungsgemäß zu verwendenden Copolymerisat (A1) in einer Menge von 10 bis 50, vorzugsweise 25 bis 50 Gew.% einpolymerisiert.

(d) Als Vinylaromaten kommen beispielsweise Styrol, α-Methylstyrol, o- und p-Chlorstyrol, o-, m-, p-Methylstyrol und p-tert.-Butylstyrol oder deren Gemische in Betracht, wobei Styrol bevorzugt ist.

Die Vinylaromaten (d) können im Polyhydroxypolyacrylatharz (A1) in Mengen von 0 bis 10, vorzugsweise 0 bis 7 Gew.% einpolymerisiert sein.

Die Summe der unter (c) und (d) genannten Prozentzahlen beträgt im allgemeinen 10 bis 50, vorzugsweise 25 bis 50 Gew.%.

(e) Als Alkylester und/oder bis zu 2 Ethersauerstoffbrücken enthaltende Alkylglykolester der Acrylsäure und/oder Methacrylsäure, die Homopolymerisate mit Glasübergangstemperaturen von —80 bis + 4,5 °C bilden, sind beispielsweise Ethylacrylat, n-Butylacrylat, i-Butylacrylat, 2-Ethylhexylacrylat, 2-Ethylhexylmethacrylat, Ethylglykolacrylat, Ethylglykolmethacrylat, Ethyldiglykolacrylat, Ethyldiglykolmethacrylat, Laurylacrylat und Laurylmethacrylat, oder deren Mischungen geeignet, wobei n-Butylacrylat und i-Butylacrylat bevorzugt sind.

Komponente (e) ist im erfindungsgemäß zu verwendenden Copolymerisat (A1) in einer Menge von 10 bis 60, vorzugsweise 20 bis 50 Gew.% einpolymerisiert.

(f) Als Amide der Acrylsäure und/oder Methacrylsäure, die am Amidstickstoff gegebenenfalls einen oder zwei Alkylreste mit 1 bis 8 Kohlenstoffatomen, welche gegebenenfalls eine Carbonylgruppe enthalten können, oder einen oder zwei Phenylreste als Substituenten tragen, kommen beispielsweise Acrylamid, Methacrylamid, N-Methylacrylamid, N-Methylmethacrylamid, N-Ethylacrylamid, N-Isopropylacrylamid, N,N-Dimethylacrylamid, N,N-Diethylacrylamid, N,N-Diisopropylacrylamid, N-Phenylacrylamid, N,N-Di-n-butylacrylamid und N-(1,1-dimethyl-3-oxo-butyl)-acrylamid (= Diacetonacrylamid), vorzugsweise Acrylamid und Methacrylamid, in Betracht.

Komponente (f) kann im Polyhydroxypolyacrylatharz (A1) in einer Menge von 0 bis 10, vorzugsweise 0 bis 5 Gew.% einpolymerisiert sein.

(g) Als polymerisierbare, olefinisch ungesättigte, heterocyclische Verbindungen der oben angegebenen allgemeinen Formeln (I) bis (VIII), wobei R für Wasserstoff ode eine Methylgruppe steht, $R^1$, $R^2$, $R^3$ und $R^4$ untereinander gleich oder verschieden sind und jeweils für Wasserstoff, eine Methyl- oder Ethylgruppe, einen gerad- oder verzweigtkettigen Alkylrest mit 3 bis 4 C-Atomen, einen gegebenenfalls durch eine Alkylgruppe mit 1 bis 4 C-Atomen, Halogen, wie z. B. Chlor oder Brom, oder eine Nitrogruppe substituierten Phenylrest, eine Gruppe der allgemeinen Formel $—R^I—A—R^{II}$, worin A Sauerstoff oder Schwefel, $R^I$ eine Methylen-, Ethylen- oder gegebenenfalls durch eine Alkylgruppe mit 1 bis 4 C-Atomen, durch Halogen oder eine Nitrogruppe substituierte Phenylengruppe und $R^{II}$ eine Methyl, Ethyl- oder gegebenenfalls durch eine Alkylgruppe mit 1 bis 4 C-Atomen, durch Halogen- oder eine Nitrogruppe substituierte Phenylengruppe bedeuten, eine Halogen- oder Nitrogruppe, sowie eine Gruppe der allgemeinen Formeln $—OR^{III}$, $—COOR^{III}$, $—SO_2R^{III}$, $—CONR^{III}R^{IV}$ oder $—SO_2NR^{III}R^{IV}$, worin $R^{III}$ und $R^{IV}$ untereinander gleich oder verschieden sind und jeweils eine Methyl- oder Ethylgruppe, einen gerad- oder verzweigtkettigen Alkylrest mit 3 bis 4 C-Atomen oder einen gegebenenfalls durch eine Alkylgruppe mit 1 bis 4 C-Atomen, durch Halogen oder eine Nitrogruppe substituierten Phenylrest bedeuten, stehen und außerdem in den Formeln (I), (II), (III), (V), (VI) und (VIII) $R^2$ und $R^3$, oder in der Formel (III) $R^3$ und $R^4$, in den Formeln (II) und (IV) $R^3$ und $R^4$ oder $R^1$ und $R^2$, sowie in den Formeln (II) und (IV) sowohl $R^3$ und $R^4$ als auch $R^1$ und $R^2$ gemeinsam mit dem Heterocyclus einen anellierten, gegebenenfalls durch eine Alkylgruppe mit 1 bis 4 C-Atomen, Halogen, wie z. B. Chlor oder Brom, oder eine Nitrogruppe

substituierten aromatischen Sechsring bilden können, kommen z. B. N-Vinylimidazole wie 1-Vinyl-2-methylimidazol, 1-Vinyl-2-phenylimidazol, 1-Vinylbenzimidazol, 1-Vinyl-2-ethylimidazol, 1-Propenyl-2-methylimidazol, 1-Vinyl-4-methylimidazol, 1-Vinyl-2-ethyl-4-methylimidazol, 1-Vinyl-4-nitroimidazol, 1-Vinylimidazol und 1-Propenylimidazol oder deren Mischungen in Betracht, wobei 1-Vinylimidazol, 1-Vinyl-2-methylimidazol und 1-Vinyl-2-phenylimidazol bevorzugt sind. Darüberhinaus sind als olefinisch ungesättigte heterocyclische Verbindungen (g) Vinylheterocyclen der Formeln (II) bis (VIII), beispielsweise 2-Vinylpyridin, 3-Vinylpyridin, 4-Vinylpyridin, 5-Ethyl-2-vinylpyridin, 6-Methyl-3-vinylpyridin, 2-Vinylchinolin, 2-Vinylisochinolin, 4-Vinylchinolin, 2-Vinylchinoxalin, 4-Vinylchinazolin, 2-Vinylpyrimidin, 4-Vinylpyrimidin und 2-Vinylpyridazin oder deren Gemische geeignet, wobei 3-Vinylpyridin und 4-Vinylpyridin bevorzugt sind.

Komponente (g) ist im erfindungsgemäß zu verwendenden Copolymerisat (A1) in einer Menge von 1 bis 25, vorzugsweise 2 bis 20 Gew.% einpolymerisiert.

(h) Als unter (a) bis (g) nicht genannte Monomere, deren einpolymerisierte Reste gegenüber Isocyanatgruppen inert sind, die also unter den beim erfindungsgemäßen Verfahren in Frage kommenden Umsetzungsbedingungen nicht mit Isocyanat- oder verkappten Isocyanatgruppierungen reagieren, seien beispielsweise genannt Vinylester mit 1 bis 12 Kohlenstoffatome enthaltenden Carbonsäuren, wie z. B. Vinylacetat, Vinylpropionat, Vinylpivalat, Vinyl-2-ethylhexanat, Vinyllaurat, Vinylbenzoat, Vinylhalogenide, wie z. B. Vinylchlorid, Vinylidenhalogenide, wie etwa Vinylidenchlorid, sowie N-Vinylpyrrolidon und N-Vinylcaprolactam und Gemische der genannten Monomeren.

Komponente (h) kann im Polyhydroxypolyacrylatharz in einer Menge von 0 bis 20, vorzugsweise 0 bis 10 Gew.% einpolymerisiert sein.

Die Summe der unter (a) bis (h) genannten Prozentzahlen beträgt 100.

Das hydroxylgruppenhaltige Copolymerisat (A1) weist im allgemeinen Hydroxylzahlen zwischen 30 und 250, vorzugsweise 50 bis 150 auf.

Das Polyhydroxypolyacrylatharz (A1) läßt sich aus den Monomeren (a) bis (h) nach üblichen Polymerisationsverfahren, beispielsweise durch kontinuierliche oder diskontinuierliche radikalinitiierte Polymerisation, vorzugsweise diskontinuierlich in organischer Lösung bei Temperaturen zwischen 80 und 160 °C, z. B. in Gegenwart radikalliefernder Polymerisationsinitiatoren herstellen. Für das erfindungsgemäße Verfahren werden die Polyhydroxypolyacrylatharze (A1), die im allgemeinen mittlere Molekulargewichte im Zahlenmittel ($M_n$) zwischen 1 000 und 20 000, bevorzugt zwischen 2 000 und 10 000, bzw. K-Werte (nach Fikentscher) zwischen 12 und 40, vorzugsweise zwischen 15 und 30 aufweisen, zweckmäßigerweise in organischen, gegenüber Isocyanatgruppen inerten Lösungsmitteln gelöst eingesetzt. Derartige geeignete Lösungsmittel sind z. B. Ester, wie n-Butylacetat, Ethylacetat und Isopropylacetat, Ether, wie z. B. Tetrahydrofuran, Dioxan und Diethylglykol, Etherester, wie z. B. Ethylglykolacetat, Methylglykolacetat und Butylglykolacetat, Kohlenwasserstoffe, insbesondere aromatische Kohlenwasserstoffe, wie Xylol oder Toluol, Ethylbenzol und Halogenkohlenwasserstoffe, wie Chlorbenzol, so wie Gemische dieser Lösungsmittel.

(A2) Unter den erfindungsgemäß einzusetzenden Polyesterpolyolen (A2) werden die üblichen Polyesterpolyole verstanden, die mindestens jeweils zwei Ester- und Hydroxylgruppen enthalten und in üblichen organischen gegenüßer Isocyanatgruppen inerten Lacklösungsmitteln bzw. Lacklösungsmittelgemischen löslich sind. Besonders kommen hierfür etwa die bekannten gesättigten Polyesterpolyole und Polycaprolactonpolyole sowie hydroxylgruppenhaltige Alkydharze, aber auch in der Kette Doppelbindungen enthaltende und urethanmodifizierte Polyesterpolyole in Frage.

Der erfindungsgemäße Einsatz der Polyesterpolyole (A2) neben den oben genannten Polyhydroxypolyacrylatharzen als Komponente (A1) ergibt im Vergleich zu Systemen, die keine Polyesterkomponente enthalten, Lacke mit deutlich höheren Festkörpergehalten bei Spritzviskosität bzw. niedrigeren Viskositäten bei konstantem Festkörpergehalt. Dabei bleiben aber überraschenderweise gleichzeitig die vorteilhaften Eigenschaften der auf reinen Polyacrylaten basierenden Systemen, wie sehr rasche Härtung der Lackschichten bei Raumtemperatur zu superbenzinfesten witterungsbeständigen Filmen hoher Kratzfestigkeit und Flexibilität erhalten.

Die genannten Polyesterpolyole besitzen im allgemeinen zwischen 30 und 500, vorzugsweise zwischen 50 und 400 liegende Hydroxylzahlen, sowie zwischen 0 und 30, bevorzugt 0 und 15, liegende Säurezahlen und entsprechende Molekulargewichte (Mn) im Zahlenmittel etwa zwischen 250 und 5 000, vorzugsweise zwischen 400 und 3 000. Die durchschnittliche Funktionalität der Polyester liegt im Bereich zwischen 2 und 6, bevorzugt zwischen 2, 3 und 5, wobei unter Funktionalität in diesem Zusammenhang die durchschnittliche Zahl der reaktionsfähigen Hydroxylgruppen pro Polyestermolekül verstanden wird. Dieser bevorzugte Funktionalitätsbereich ergibt sich dadurch, daß einerseits zu wenig verzweigte Polyesterpolyole nur schwach vernetzende Lackfilme geringer Härtungsgeschwindigkeit und niedriger mechanischer Festigkeit ergeben, andererseits bei zu stark verzweigten Polyolen Überzüge eines sehr hohen Vernetzungsgrades und damit zu hoher Sprödigkeit resultieren.

Die Polyesterole lassen sich im allgemeinen nach üblichen Methoden, etwa entsprechend dem Stand der Technik herstellen durch Umsetzung von aliphatischen und/oder cycloaliphatischen und/oder aromatischen, gegebenenfalls olefinisch ungesättigten Polycarbonsäuren, deren Anhydriden oder

kurzkettigen Hydroxyalkyl- bzw. Alkylestern mit einem Überschuß an polyfunktionellen aliphatischen und cycloaliphatischen Alkoholen, sowie aromatische Gruppen enthaltenden mehrwertigen Alkoholen mit aliphatisch gebundenen Hydroxylfunktionen. Die ebenfalls erfindungsgemäß zu verwendenden Polycaprolactonpolyole können nach an sich bekannten Verfahren durch Polymerisation von Lactonen, wobei polyfunktionelle aliphatische Alkohole als Kettenstarter fungieren, hergestellt werden. Auch die üblicherweise verwendeten nach bekannten Verfahren des Standes der Technik hergestellten hydroxylgruppenhaltigen ölmodifizierten Alkydharze lassen sich erfindungsgemäß als Komponente (A2) einsetzen, wenn sie den o. a. Bedingungen bezüglich Hydroxylzahl, Säurezahl, Molekulargewicht und Funktionalität entsprechen.

Für die Herstellung der Polyesterpolyole eignen sich als Polycarbonsäuren besonders solche der Formel

$$R(COOH)_n$$

wobei

R einen n-wertigen gesättigten, gegebenenfalls olefinisch ungesättigten aliphatischen Kohlenwasserstoffrest mit 2 bis 18, vorzugsweise 2 bis 8 Kohlenstoffatomen, einen gegebenenfalls ungesättigte cycloaliphatische Gruppen enthaltenden Kohlenwasserstoffrest mit 4 bis 18, bevorzugt 6 bis 12 Kohlenstoffatomen oder einen aromatischen Kohlenwasserstoffrest mit 6 bis 12, bevorzugt 6 bis 10 Kohlenstoffatomen, und

n eine ganze Zahl von 2 bis 3, vorzugsweise 2 bedeuten

und die Carboxylgruppen mit jeweils unterschiedlichen Kohlenstoffatomen von R verknüpft sind.

Zum Einsatz hierfür kommen z. B. : Bernsteinsäure, Adipinsäure, Glutarsäure, Korksäure, Sebazinsäure, Cyclobutan-1,3-dicarbonsäure, Hexahydrophthalsäure, Hexahydroisophthalsäure, Hexahydroterephthalsäure, Tricyclodecandicarbonsäure, Endoethylenhexahydrophthalsäure, 4-Methylhexahydrophthalsäure, Tetrahydrophthalsäure, Endoethylentetrahydrophthalsäure, Phthalsäure, Isophthalsäure, Terephthalsäure, Naphthalin-1,5-dicarbonsäure, Trimellithsäure, Pyromellithsäure, und in untergeordneten Mengen auch Maleinsäure, Fumarsäure, Citraconsäure, Mesaconsäure und Itaconsäure, wobei Phthalsäure, Isophthalsäure, Hexahydrophthalsäure und Adipinsäure besonders bevorzugt sind.

Als für die Umsetzung mit überschüssigen mehrwertigen Alkoholen geeignete Polycarbonsäureanhydride kommen beispielsweise die Anhydride der Bernsteinsäure, Hexahydrophthalsäure, Endoethylenhexahydrophthalsäure, 4-Methylhexahydrophthalsäure, Tetrahydrophthalsäure, Endoethylentetrahydrophthalsäure, Phthalsäure, Trimellithsäure, in untergeordneten Mengen der Maleinsäure und Citraconsäure, sowie das Dianhydrid der Pyromellithsäure in Frage, wobei die Anhydride der Hexahydrophthalsäure und Phthalsäure bevorzugt sind.

Zur Herstellung der Polyester eignen sich zum Beispiel folgende Alkohole einer Funktionalität zwischen 2 und 4 und eines Molekulargewichtsbereiches von 62 bis 300 :

Zweiwertige Alkohole, wie Ethylenglykol, Propandiol-1,2, Propandiol-1,3, Butandiol-1,4, Butandiol-1,3, Pentandiol-1,5, Hexandiol-1,6, Octandiol-1,8, Decandiol-1,10, 2-Methylpentandiol-1,5, 2-Ethylbutandiol-1,4, 2,2-Dimethylpropandiol-1,3, 2-Ethylhexandiol-1,3, Diethylenglykol, Triethylenglykol, Dipropylenglykol, Tripropylenglykol, Cyclohexandiol-1,4, 1,4-Dihydroxymethylcyclohexan, 1,4-Dihydroxyethylcyclohexan, 1,3-Dihydroxymethylcyclohexan, 4,4'-Dihydroxydicyclohexylpropan, 4,4'-Dihydroxymethyldicyclohexylpropan, 3,3'-Dimethyl-4,4'-dihydroxydicyclohexylpropan, 3(4),8(9)-Dihydroxymethyltricyclo-[5.2.1.$0^{2-6}$]-decan, 1,4-Dihydroxymethylbenzol, zweifach oxethyliertes Hydrochinon, zwei- und vierfach oxethyliertes Bisphenol A (= 4,4'-Dihydroxydiphenylpropan) und das Esterdiol aus 2,2-Dimethylpropandiol-1,3 und 2,2-Dimethyl-3-hydroxypropionsäure, sowie drei- und mehrwertige Alkohole wie Trimethylolethan, Trimethylolpropan, Glycerin und Pentaerythrit, wobei Ethylenglykol, Propandiol-1,2, Butandiol-1,3, Hexandiol-1,6, 2,2-Dimethylpropandiol-1,3, 1,4-Dihydroxymethylcyclohexan, Diethylenglykol, Triethylenglykol und Trimethylolpropan bevorzugt sind.

Die Herstellung derartiger geeigneter Polyesterpolyole kann gemäß dem Stand der Technik erfolgen, wie er etwa in der einschlägigen Literatur beschrieben ist :

1. Johannes Scheiber, Chemie und Technologie der künstlichen Harze, Wissenschaftliche Verlagsgesellschaft mbH, Stuttgart, 1943
2. Ullmanns Encyklopädie der technischen Chemie, Bd. 14 (1963), S. 80 bis 106
3. Hans Wagner/Hans Friedrich Sarx, Lackkunstharze, 5. Aufl., Carl Hanser Verlag, München, 1971
4. Houben-Weyl, Methoden der Organischen Chemie, Hrsg. E. Müller, Bd. XIV/2, Makromolekulare Stoffe, Teil 2, 4. Aufl., Georg Thieme Verlag, Stuttgart, 1963, S. 1 bis 47.

Neben den hier erwähnten erfindungsgemäß zu verwendenden Polyesterpolyolen lassen sich als Komponente (A2) auch die gebräuchlichen durch Polyaddition von ε-Caprolacton oder seinen Derivaten an polyfunktionelle Alkohole herzustellenden Polycaprolactonpolyole verwenden.

Die für das erfindungsgemäße Verfahren einzusetzenden Polycaprolactonpolyole weisen im allgemeinen zwei bis vier endständige Hydroxylgruppen auf und werden, wie u. a. in der US-A 3 169 945 beschrieben, durch kationische Polymerisation z. B. von ε-Caprolacton unter Verwendung von Alkoholen einer Funktionalität von zwei bis vier als Initiatoren (= Starter) hergestellt. Als derartige Initiatoren werden Diole, wie etwa Ethylenglykol, Diethylenglykol, Triethylenglykol, Propandiol-1,2, Propandiol-1,3, Polyethylenglykol, Polypropylenglykol und gemischte Poly(oxyethylen-oxypropylen) glykole, Triole, wie Trimethylolpropan, Glycerin und 1,2,6-Hexantriol und Tetrole, wie beispielsweise Pentaerythrit eingesetzt. Die erfindungsgemäß zu verwendenden Polycaprolactonpolyole besitzen Molekulargewichte im Zahlenmittel (Mn) etwa zwischen 250 und 4 000, bevorzugt zwischen 500 und 3 000. Polycaprolactondiole werden bevorzugt in Abmischung mit höherfunktionellen Polycaprolactonpolyolen eingesetzt, so daß eine durchschnittliche Funktionalität etwa zwischen 2, 3 und 4, vorzugsweise 2, 3 und 3, erreicht wird. Ebenso bevorzugt ist der erfindungsgemäße Einsatz von Polycaprolactonpolyolen mit den erstgenannten Polyesterpolyolen derartig, daß eine durchschnittliche Gesamtfunktionalität der Komponenten (A2) von vorzugweise zwischen 2, 3 und 5 resultiert, wobei Funktionalität die bereits zuvor angegebene Bedeutung haben soll.

Die hydroxylgruppenhaltige Bindemittelkomponente (A) besteht allgemein aus 40 bis 99 Gew.%, bevorzugt 45 bis 95 Gew.% eines oder mehrerer Polyhydroxypolyacrylate (A1) und 1 bis 60 Gew.%, vorzugsweise 5 bis 55 Gew.% eines oder mehrerer löslicher Polyesterpolyole (A2). Daneben kann die Komponente (A2) — etwa herstellungsbedingt — noch untergeordnete Mengen anderer niedermolekularer Verbindungen mit gegenüber Isocyanat reaktiven Gruppen enthalten. Als solche seien etwa die zur Herstellung der Polyesterpolyole eingesetzten polyfunktionellen Alkohole des Molekulargewichtsbereichs von 62 bis 300 genannt, die in den erfindungsgemäßen Lackmischungen als reaktive Verdünner fungieren können, d. h. letztlich in die gehärteten Überzüge eingebaut werden. Die Mitverwendung dieser niedermolekularen Polyole beschränkt sich jedoch auf Mengen von maximal 10 Gew.% der Komponente (A2).

Die erfindungsgemäße Polyolkomponente (A) weist Hydroxylzahlen von insgesamt 30 bis 250, vorzugsweise von 50 bis 170 auf. Sie kann durch einfaches Abmischen des in organischer Lösung vorliegenden Polyhydroxypolyacrylatharzes (A1) mit der lösungsmittelfreien Polyesterpolyolkomponente (A2) hergestellt werden, wobei dieses Verfahren im Falle des Vorliegens bei Raumtemperatur flüssiger Polyester zu bevorzugen ist. Bei Verwendung fester Polyesterole ist es dagegen günstiger, beide Komponenten (A1) und (A2) in organischer Lösung miteinander zu mischen. Ebenfalls möglich ist es, das erfindungsgemäße Polyhydroxypolyacrylatharz (A1) bei Anwesenheit der Polyesterolkomponente (A2) in organischer Lösung aus den Monomeren (a) bis (h) zu polymerisieren, wie es beispielsweise in der DE-A 23 14 044 beschrieben ist. Hierzu wird das Polyesterol, gegebenenfalls nach Verdünnung mit organischen Lösungsmitteln entweder teilweise oder vollständig vorgelegt und anschließend die Monomerenmischung samt Katalysator zudosiert und, wie bereits beschrieben, polymerisiert. Noch fehlende Anteile an Polyesterpolyol oder Lösungsmittel können nach der Polymerisation zur vorliegenden Mischungen hinzugefügt werden. Man kann die Polymerisation selbstverständlich auch in Anwesenheit eines teilweise ungesättigten Polyesterols, für dessen Herstellung etwa untergeordnete Mengen an Maleinsäureanhydrid oder Fumarsäure verwendet werden, durchführen. Hierbei sind allerdings, wie aus der JA-A 75-22092 und der DE-A 26 44 550 sowie 26 44 691 hervorgeht, nur Polyesterpolyole einsetzbar, die durchschnittlich maximal eine Doppelbindung, bevorzugt weniger als 0,8 Doppelbindungen pro Molekül enthalten, einsetzbar. Bei höheren Konzentrationen an vernetzenden Doppelbindungen im Polyesterpolyol führt die Copolymerisationsreaktion im allgemeinen zu vernetzten bzw. gelierten und damit unbrauchbaren Produkten. Nach Durchführung der Acrylatpolymerisation können gegebenenfalls noch fehlende Anteile an Polyesterpolyol oder Lösungsmittel zur vorliegenden Mischung hinzugefügt werden.

Als organische Lösungsmittel für die Abmischung der Komponenten (A1) und (A2), die Herstellung von (A1) in Gegenwart von (A2) bzw. die Verdünnung des Polyolgemisches (A) eignen sich die bereits genannten gegenüber Isocyanatgruppen inerten Lacklösungsmittel, in welchen die Polyhydroxypolyacrylatharze (A1) gelöst vorliegen.

(B) Als erfindungsgemäß zu verwendende, gegebenenfalls teilweise oder vollständig mit CH-, NH- oder OH-aciden Blockierungsmitteln verkappte, Isocyanuratgruppen aufweisende Polyisocyanate einer Funktionalität zwischen 2, 5 und 6, vorzugsweise zwischen 3 und 5, eignen sich solche mit vorwiegend cycloaliphatisch gebundenen Isocyanatgruppen. Bevorzugt sind dabei derartige Isocyanuratgruppen enthaltende Polyisocyanate, die aus 3-Isocyanatomethyl-3,5,5-trimethylcyclohexylisocyanat (= Isophorondiisocyanat = IPDI) als monomerem Diisocyanat erhalten werden. Die Herstellung derartiger Isocyanuratgruppen enthaltender Polyisocyanate kann z. B. nach üblichen Methoden erfolgen, wie sie beispielsweise in den GB-PS 1 391 066, DE-A 23 25 826 oder DE-A 27 32 662 beschrieben sind, z. B. durch Trimerisierung des Diisocyanats bei Temperaturen zwischen ca. 40 und 120 °C in Anwesenheit von Katalysatoren, wie etwa Metallverbindungen, z. B. Metallnaphthenaten, Erdalkaliacetaten, -formiaten und -carbonaten, Metallalkoxiden und Eisenacetylacetonat, bevorzugt sekundären und tertiären Aminen, wie Aziridinen in Kombination mit Trialkylaminen oder Triethylendiamin, kombiniert mit Propylenoxid.

Ebenfalls in Frage kommen Isocyanuratgruppen aufweisende Polyisocyanate etwa auf Basis von 1,4-Diisocyanatocyclohexan (= Cyclohexan-1,4-diisocyanat) und 4,4'-Diisocyanatodicyclohexylmethan (= Dicyclohexylmethan-4,4'-diisocyanat).

Auch Kombinationen der hier genannten bevorzugten cycloaliphatischen isocyanuratgruppenhaltigen Polyisocyanate (B1) mit Biuretgruppen enthaltenden Isocyanataddukten (B2), die vorwiegend aliphatisch gebundene Isocyanatgruppen aufweisen, sind erfindungsgemäß einsetzbar. Als bevorzugtes

Polyisocyanat (B2) sei hier vor allem das seit langem bekannte und, wie oben erwähnt, speziell in Zweikomponenten-Polyurethanlacken für den Automobilreparatursektor eingesetzte biuretisierte Hexamethylendiisocyanat genannt. Seine Herstellung erfolgt, wie beispielsweise in DE-C 1 101 394, DE-C 1 104 394, DE-C 1 174 759, DE-C 1 174 760, DE-C 1 227 004, DE-C 1 227 007, der GB-A 1 044 932 und der DE-A 1 931 055 beschrieben, etwa durch Einwirkung von freiem oder gebundenem Wasser (z. B. als Kristallwasser oder in Form von Ameisensäure), primären aliphatischen Monoaminen oder tertiären aliphatischen Monoalkoholen bei Temperaturen zwischen 80 und 200 °C auf Hexamethylendiisocyanat und anschließendes Entfernen des überschüssigen Diisocyanates mittels Vakuumdestillation im Dünnschichtverdampfer. Als erfindungsgemäß einzusetzende Isocyanatkomponenten (B2) eignen sich ebenfalls isocyanuratgruppenhaltige Polyisocyanate mit vorwiegend aliphatisch gebundenen Isocyanatgruppen, wobei speziell das durch Trimerisierung von Hexamethylendiisocyanat erhaltene Isocyanataddukt bevorzugt ist. Diese Produkte können z. B. durch katalytische Trimerisierung eines Teils der Isocyanatgruppen von organischen Diisocyanaten, wie beispielsweise in der DE-C 1 201 992, den DE-A 1 644 809, DE-A 1 670 667, DE-A 2 325 826, DE-A 2 616 415, DE-A 2 616 416, DE-A 2 644 684, DE-A 2 724 914 und DE-A 2 806 731 beschrieben, hergestellt werden.

Die Komponente (B) setzt sich zusammen aus 60 bis 100 Gew.%, vorzugsweise 70 bis 100 Gew.%, solcher Polyisocyanate (B1), die Isocyanuratgruppen und vorwiegend cycloaliphatisch gebundene Isocyanatgruppen aufweisen, und 0 bis 40 Gew.%, bevorzugt 0 bis 30 Gew.% der obengenannten Biuretgruppen und/oder Isocyanuratgruppen enthaltenden Polyisocyanate (B2) mit vorwiegend aliphatisch gebundenen Isocyanatgruppen, wobei die Summe der unter (B1) und (B2) genannten Prozentzahlen 100 beträgt.

Anstelle der obengenannten Mischungen aus den Polyisocyanatkomponenten (B1) und (B2) sind für das erfindungsgemäße Verfahren ebenfalls isocyanuratgruppenhaltige Polyisocyanate (B) mit vorwiegend cycloaliphatisch gebundenen Isocyanatgruppen, welche sowohl cycloaliphatische als auch aliphatische Diisocyanate in eingebauter Form enthalten, verwendbar. Als cycloaliphatische Diisocyanate kommen etwa 1,4-Diisocyanatocyclohexan und 4,4'-Diisocyanatodicyclohexylmethan, bevorzugt aber Isophorondiisocyanat, als aliphatisches Diisocyanat vorzugsweise Hexamethylendiisocyanat in Frage. Diese gemischt cycloaliphatisch/aliphatischen Polyisocyanate werden im allgemeinen, wie z. B. in der DE-A 30 33 860 beschrieben, durch Trimerisierung des Diisocyanatgemisches bei Temperaturen zwischen 40 und 100 °C und bevorzugtem Einsatz geeigneter Hydroxylgruppen-substituierter quaternärer Ammoniumhydroxide hergestellt. Für das erfindungsgemäße Verfahren geeignete gemischte isocyanurathaltige Addukte enthalten beispielsweise 60 bis 99 Gew.%, bevorzugt 70 bis 98 Gew.% cycloaliphatisches Diisocyanat, vorzugsweise Isophorondiisocyanat, und 1 bis 40 Gew.%, bevorzugt 2 bis 30 Gew.% aliphatisches Diisocyanat, vorzugsweise Hexamethylendiisocyanat eingebaut, wobei die Summe der unter 1) und 2) angegebenen Prozentzahlen 100 beträgt.

Selbstverständlich sind für das erfindungsgemäße Verfahren sämtliche vorgenannten Polyisocyanat-Addukte in allen möglichen Kombinationen einsetzbar.

Der erfindungsgemäße Einsatz derartiger Polyisocyanatmischungen, die in untergeordneten Mengen biuretgruppenhaltige Addukte mit aliphatisch gebundenen Isocyanatgruppen — etwa auf Basis von Hexamethylendiisocyanat — bzw. Trimerisate aus cycloaliphatischen und in geringeren Mengen aliphatischen Diisocyanaten — etwa Isophorondiisocyanat und Hexamethylendiisocyanat — umfassen, kann in gewissen Fällen vorteilhaft sein: bedingt durch die teilweise Verwendung aliphatischer Isocyanataddukte können Lackfilme besonders hoher Elastizität und Vernetzungsgeschwindigkeit resultieren, wobei überraschenderweise die durch den Einsatz cycloaliphatischer Trimerisate implizierten Vorteile, wie etwa ein hohes Härteniveau der Lackfilme und ein relativ günstiges pot life sowie vor allem eine niedrige Inhalationstoxizität der Lackmischungen weitgehend erhalten bleiben.

Als für die Lackpolyisocyanate (B) zu verwendende Blockierungsmittel kommen in Frage:

CH-, NH- oder OH-acide Blockierungsmittel wie z. B. Malonsäuredialkylester, Acetessigsäuredialkylester, Acetylaceton, ε-Caprolactam, Pyrrolidon, Phenole, p-Hydroxybenzoesäureester, Cyclohexanol, t-Butanol, bevorzugt Oxime wie Benzophenonoxim, Cyclohexanonoxim, Methylethylketoxim, Dimethylketoxim, besonders bevorzugt sind dabei Methylethylketoxim und Dimethylketoxim.

Komponente (B) kann unverkappt, teilweise oder vollständig verkappt sein. Bevorzugt sind unverkappte Polyisocyanate.

Die Mengenverhältnisse der erfindungsgemäß zu verwendenden Bindemittelkomponenten Polyhydroxypolyacrylat (A1), Polyesterpolyol (A2) sowie Polyisocyanat bzw. Polyisocyanatgemisch (B) werden zweckmäßigerweise so gewählt, daß das Äquivalentverhältnis von — gegebenenfalls verkappten — Isocyanatgruppen zu reaktionsfähigen Hydroxylgruppen zwischen 0,25 : 1 und 4 : 1, vorzugsweise zwischen 0,5 : 1 und 2 : 1, liegt.

Die Herstellung von Überzügen nach dem erfindungsgemäßen Verfahren erfolgt durch Vermischen der Komponenten (A) und (B), zweckmäßigerweise gelöst in organischem Lösungsmittel oder Lösungsmittelgemisch, gegebenenfalls Zusatz von Pigmenten, wie üblichen Weiß- und Schwarzpigmenten, etwa Titandioxiden (Rutil), Zinksulfiden und Ruß oder Buntpigmenten, z. B. Cadmiumsulfid, Eisenoxidgelb, Eisenoxidrot, Chromoxid, Benzidingelb, Phthalocyaninblau, Phthalocyaningrün, Thioindigo und Chinacridonen, z. B. in Mengen von bis zu 250 %, bezogen auf Gesamtmenge Bindemittel (= Komponenten (A) und (B)), sowie anderer für die Verarbeitung von 2-Komponentenlacken üblicher Hilfs- und Zusatzstoffe

und Auftragen auf das zu überziehende Substrat. Prinzipiell können auch Katalysatoren, wie z. B. Metallverbindungen, etwa Blei-, Zink- und Kobaltnaphthenate, Blei-, Zinn- und Calciumoctoat, Dibutylzinndiacetat, Dibutylzinndilaurat, Eisenacetylacetonat und Basen wie Triethylendiamin und Diethylethanolamin in Mengen von ca. 0,001 bis 10 Gew.%, bezogen auf die Gesamtbindemittelmenge, verwendet werden, jedoch erfolgt die Herstellung der Überzüge vorzugsweise ohne Katalysatorzugabe, da es, wie bereits erwähnt, ein überraschender Vorteil der erfindungsgemäßen Lackmischungen ist, daß sie ohne Beschleuniger sehr rasch zu harten, kratzfesten und superbenzinfesten Schichten aushärten und dabei dennoch praxisgerechte Topfzeiten ergeben.

Als Auftragsmethoden kommen die üblichen in Betracht, beispielsweise Spritzen, Tauchen, Streichen oder Walzen.

Nach dem erfindungsgemäßen Verfahren lassen sich beispielsweise Metallteile aus Aluminium, Zink, Zinn, Eisen und Stahl, wie Stahlbleche, oder verzinkte Stahlbleche und Aluminiumbleche, darüberhinaus auch andere Substrate wie etwa Holz, Papier, Beton und Kunststoffe, z. B. PVC und Polyamid beschichten.

Die Härtung der Überzüge kann nach dem Auftragen auf das Substrat in üblicher Weise erfolgen, beispielsweise bei Raumtemperatur innerhalb von 24 Stunden bis 7 Tagen, oder zweckmäßigerweise nach Ablüften bei Raumtemperatur, bei Temperaturen von etwa 60 bis 80 °C innerhalb von 20 bis 60 Minuten.

Nach dem erfindungsgemäßen Verfahren lassen sich Überzüge mit besonders vorteilhaften Eigenschaften erhalten. Die erfindungsgemäß erhaltenen Überzüge zeichnen sich insbesondere durch hohe Kratzfestigkeit, ausgezeichnete Superbenzinfestigkeit nach relativ kurzen Trocknungszeiten, gleichzeitig hohe Elastizität, guten Glanz und hervorragende Witterungsstabilität bei rascher Härtung und relativ langen Topfzeiten sowie hohen Festkörpergehalten bei Spritzviskosität der zugrundeliegenden Lackmischungen aus.

Die in den Beispielen und Vergleichsbeispielen genannten Teile und Prozente sind, soweit nicht anders angegeben, Gewichtsteile und Gewichtsprozente.

Herstellung der Polyhydroxypolyacrylatharze

Die Herstellung der Polyacrylatharze A bis C erfolgt entsprechend dem Stand der Technik.

In einem mit Blattrührer, Rückflußkühler, Zulaufgefäß, Thermometer und Gaseinleitungsrohr versehenen Reaktionsgefäß werden 100 Teile n-Butylacetat/Xylol 1 : 1 auf 100 °C erhitzt. Unter Einhalten dieser Temperatur und starkem Rühren wird eine Lösung von 77,5 Teilen Butandiol-(1,4)-monoacrylat, 42,5 Teilen Hydroxyethylacrylat, 75 Teilen Methylmethacrylat, 90 Teilen t-Butylacrylat, 190 Teilen n-Butylacrylat und 25 Teilen 1-Vinylimidazol sowie 10 Teilen Azodiisobuttersäurenitril in 130 Teilen n-Butylacetat/Xylol 1 : 1 mit konstanter Zulaufgeschwindigkeit unter Luftausschluß (im schwachen Stickstoffstrom) innerhalb eines Zeitraumes von 4 Stunden zugetropft. Anschliessend werden zur Nachpolymerisation noch 2,5 Teile Azodiisobuttersäurenitril in 75 Teilen n-Butylacetat/Xylol 1 : 1 im Verlauf von 2 Stunden gleichmäßig zudosiert.

Das erhaltene Polyacrylatharz besitzt folgende Kennzahlen :
Hydroxylzahl = ca. 102 (bez. auf fest)
Viskosität bei 23 °C = 2 750 mPa · s
K-Wert (3 %ig in Dimethylformamid) = 21,8.

Polyacrylatharz B

Die Herstellung erfolgt unter den gleichen Bedingungen wie bei Polyacrylatharz A mit dem Unterschied, daß die nachstehend genannten Comonomeren eingesetzt werden : 103 Teile Hydroxyethylacrylat, 50 Teile Methylmethacrylat, 152 Teile t-Butylacrylat, 192,5 Teile n-Butylacrylat und 2,5 Teile Acrylsäure. Die Kennzahlen des Copolymerisates lauten :
Hydroxylzahl = ca. 98,
Säurezahl = 6,5,
Viskosität bei 23 °C = 3 400 mPa · s ;
K-Wert (3 %ig in Dimethylformamid) = 23,2.

Polyacrylatharz C

In einem wie oben beschriebenen Reaktionsgefäß wird eine Mischung aus 100 Teilen Ethylglykolacetat, 200 Teilen Xylol und 149 Teilen Glycidylester von α,β-Dialkylalkanmonocarbonsäuren der Bruttoformel $C_{13}H_{24}O_3$ auf 135 °C erhitzt. Anschließend wird bei dieser Temperatur ein Gemisch aus 101 Teilen Methylmethacrylat, 94 Teilen Hydroxyethylmethacrylat, 111 Teilen Styrol, 44 Teilen Acrylsäure, 1,5 Teilen t-Dodecylmercaptan und 5 Teilen Di-tert.-Butylperoxid im Verlauf von 2 Stunden mit konstanter Zulaufgeschwindigkeit zugetropft und die Harzlösung noch 6 Stunden bei 135 °C nachreagieren lassen. Die Polymerisatlösung mit einem Festkörpergehalt von 60 % wird mit Xylol auf 50 % Feststoffgehalt verdünnt und besitzt eine Auslaufzeit von 250 sec im DIN-Becher 4 bei 23 °C. Weitere Kennzahlen :

OH-Zahl (bez. auf fest) = ca. 150,
Säurezahl = ca. 7,
K-Wert = 23,9.

Polyesterol A

In ein mit Blattrührer, Füllkörperkolonne mit Kühler sowie Vakuumvorrichtung und Vorlagegefäß, Thermometer und Gaseinleitungsrohr versehenes Reaktionsgefäß werden 1 314 Teile Adipinsäure, 90 Teile Phthalsäureanhydrid, 524 Teile Trimethylolpropan und 708 Teile Propandiol-1,2 eingefüllt. Die Mischung wird unter Stickstoffatmosphäre aufgeschmolzen und bei Normaldruck unter Rühren und langsamer Temperatursteigerung bis auf maximal 180 °C so lange verestert, bis etwa 290 Teile Wasser abdestilliert sind. Anschließend setzt man die Veresterung unter Vakuum (ca. 150 bis 200 mbar) fort, bis eine Säurezahl von < 4 erreicht ist. Der Polyester wird nun auf 70 bis 80 °C abgekühlt und unter Rühren in Xylol/n-Butylacetat 1 : 1 gelöst, wobei ein Festkörpergehalt von ca. 62 % eingestellt wird. Die Lösung besitzt eine Auslaufzeit von 40 Sekunden im DIN-4-Becher bei 23 °C und eine Hydroxylzahl von ca. 215 (bez. auf fest).

Polyesterol B

Es wird ebenso verfahren, wie für Polyesterol A beschrieben, mit dem Unterschied, daß die obengenannten Einsatzstoffe in den nachstehend angegebenen Mengen verwendet werden : 1 314 Teile Adipinsäure, 177 Teile Phthalsäureanhydrid, 321 Teile Trimethylolpropan und 843 Teile Propandiol-1,2. Das resultierende Polyesterol (62 %ig in Xylol/n-Butylacetat 1 : 1) besitzt folgende Kennzahlen :
Auslaufzeit im DIN-4-Becher bei 23 °C = Sekunden ;
Säurezahl = ca. 3 ;
Hydroxylzahl = ca. 170 (bez. auf fest).

Polyesterol C

In der für die Herstellung von Polyesterol A verwendeten Apparatur werden 1 232 Teile Hexahydrophthalsäureanhydrid, 292 Teile Adipinsäure, 281 Teile Trimethylolpropan, 279 Teile Ethylenglykol, 403 Teile 1,4-Dihydroxymethylcyclohexan und 234 Teile 2,2-Dimethylpropandiol-1,3 bei bis auf maximal 200 °C ansteigender Temperatur verestert, bis ca. 190 Teile Wasser abdestilliert sind. Anschließend läßt man bei 200 °C im Vakuum weiter reagieren, bis eine Säurezahl von ca. 10 erreicht ist und verdünnt das erhaltene Polyesterol, wie oben beschrieben, mit Xylol/n-Butylacetat 1 : 1. Das Produkt hat folgende Kennzahlen :
Auslaufzeit im DIN-4-Becher bei 23 °C, 50 %ig in Xylol/n-Butylacetat 1 : 1 = 25 Sekunden ;
Hydroxylzahl = ca. 105 (bez. auf fest).

Verwendete Polyisocyanate

Zur Herstellung der erfindungsgemäßen Überzüge werden folgende Polyisocyanatkomponenten (B) eingesetzt :

Polyisocyanat I

Isocyanuratgruppenhaltiges Polyisocyanat mit vorwiegend cycloaliphatisch gebundenen Isocyanatgruppen auf Basis von Isophorondiisocyanat, 70 %ig in Xylol/Ethylglykolacetat 1 : 1 ; NCO-Gehalt = ca. 12 %.

Polyisocyanat II

Biuretgruppenhaltiges Polyisocyanat mit aliphatisch gebundenen Isocyanatgruppen auf Basis von Hexamethylendiisocyanat, 75 %ig in Xylol/Ethylglykolacetat 1 : 1 ; NCO-Gehalt = ca. 16,5 %.

Polyisocyanat III

Isocyanuratgruppenhaltiges Polyisocyanat mit aliphatisch gebundenen Isocyanatgruppen auf Basis von Hexamethylendiisocyanat, lösungsmittelfrei ; NCO-Gehalt = ca. 22 %.

1. Prüfung unpigmentierter Zweikomponenten-Reaktionslacke :

Die obengenannten Polyacrylatharze und Polyesterole A bis C werden, wie in Tabelle 1 angegeben, mit den Polyisocyanaten I bis III kombiniert und die Eigenschaften der hieraus erhaltenen Klarlackfilme ermittelt.

Dazu werden jeweils die in Tabelle 1 genannten Mengen an Copolymerisat- und Polyesterlösung mit

Festkörpergehalten von ca. 62 % für die Beispiele 1 bis 7 und die Vergleichsbeispiele 8 bis 10 sowie ca. 50 % für die Vergleichsbeispiele 11 und 12 mit den in der Tabelle 1 angegebenen stöchiometrischen Mengen an Polyisocyanat bzw. Polyisocyanatgemisch (OH/NCO = 1 : 1) gründlich vermischt und anschließend mit n-Butylacetat auf Spritzviskosität (Auslaufzeit 20 sec, DIN-Becher 4 bei 23 °C) verdünnt. Bei den Vergleichsbeispielen 10 und 12 wird zusätzlich noch je eine Formulierung unter Katalysatorzugabe (24 Teile 1 %ige Lösung von Dibutylzinndilaurat in n-Butylacetat, entsprechend 0,07 % fest/fest, und 37 Teile 4 %ige Lösung von Calciumoctoat in n-Butylacetat, entsprechend 0,43 % fest/fest) hergestellt. Die Mischungen werden anschließend auf Stahlbleche mit einer Trockenschichtdicke von 40 bis 50 µm aufgespritzt. Die Härtung der Lackschichten erfolgt entweder 1 Tag und 7 Tage bei Raumtemperatur oder nach 30 Minuten Ablüften bei Raumtemperatur sowohl 30 Minuten als auch 60 Minuten bei 80 °C im Umluftofen. Für die Härtung von 7 Tagen bei Raumtemperatur und 60 Minuten bei 80 °C werden jeweils die Pendelhärte nach König, die Kratzfestigkeit und Erichsentiefung, für die Härtung von 1 Tag bei Raumtemperatur die Pendelhärte nach König und für 30 Minuten bei 80 °C die Pendelhärte und die Erichsentiefung geprüft. Die Prüfergebnisse sind ebenfalls in Tabelle 1 zusammengefaßt.

Wie aus Tabelle 1 hervorgeht, zeigen die erfindungsgemäß hergestellten Klarlackfilme ohne Verwendung von Katalysator gleichzeitig rasche Härtung, hohe Endhärte, Kratzfestigkeit und Elastizität sowohl bei Raumtemperaturtrocknung als auch bei forcierter Trocknung. Die entsprechend aus einem Polyesterpolyol (Vergleichsbeispiel 8) oder Polyacrylatharzen (Vergleichsbeispiele 9 bis 12) gemäß Stand der Technik und dem isocyanuratgruppenhaltigen Polyisocyanat I erhaltenen Filme zeigen — auch bei Einsatz hoher Katalysatormengen — ein weit weniger günstiges Eigenschaftsspektrum als die erfindungsgemäßen Überzüge, etwa nicht ausreichende Elastizität bei hoher Härte und Kratzfestigkeit oder umgekehrt.

2. Prüfung der pigmentierten Zweikomponenten-Reaktionslacke (entsprechen Beispielen 1 bis 7 und Vergleichsbeispielen 8 bis 12)

400 Teile der Copolymerisatlösungen mit Festkörpergehalten von ca. 62 % für die Beispiele 1 bis 7 sowie die Vergleichsbeispiele 8 bis 10 und von ca. 50 % für die Vergleichsbeispiele 11 und 12 werden mit 350 Teilen Titandioxid (Rutil) und 120 Teilen eines Lösungsmittelgemisches von n-Butylacetat/Xylol/Ethylglykolacetat 4 : 4 : 2 zu einem Lack angerieben. Zu dem pigmentierten Lackansatz werden jeweils die in Tabelle 1 angegebenen stöchiometrischen Mengen an Polyisocyanatlösung bzw. Polyisocyanatgemisch zugegeben und die erhaltenen Lacke mit dem oben angegebenen Lösungsmittelgemisch auf Spritzviskosität (Auslaufzeit 20 sec., DIN-Becher 4 bei 23 °C) verdünnt. Für die Vergleichsbeispiele 10 und 12 wird zusätzlich noch je eine Formulierung unter Zugabe eines Katalysatorgemisches aus 24 Teilen 1 %iger Lösung von Dibutylzinndilaurat (entsprechend 0,07 % fest auf Bindemittel) und 37 Teilen 4 %iger Lösung von Calciumoctoat in n-Butylacetat (entsprechend 0,43 % fest auf Bindemittel) hergestellt. Die Lacke werden anschließend mit einer Trockenschichtdicke von ca. 50 µm auf Stahlbleche aufgespritzt. Die lackierten Bleche werden 30 Minuten bei Raumtemperatur abgelüftet und anschließend 60 Minuten bei 80 °C im Umluftofen, außerdem 7 Tage bei Raumtemperatur getrocknet. Es wird jeweils die Pendelhärte nach König gemäß DIN 53 157, die Kratzfestigkeit gemäß DIN 53 230, die Erichsentiefung nach DIN 53 156 sowie die Superbenzinfestigkeit (jeweils nach Trocknung von 60 Minuten bei 80 °C und nach 4 Tagen Raumtemperaturtrocknung) der gehärteten Lackfilme, außerdem der Festkörpergehalt der fertigen Lackmischungen bei Spritzviskosität (s. o.) sowie ihr pot life geprüft, wobei hierunter die Zeit bis zur Gelierung der genannten Lösungen bei 23 °C verstanden wird.

Zur Prüfung der Superbenzinfestigkeit läßt man einen mit Superbenzin getränkten Wattebausch 5 Minuten auf den gehärteten Lackfilm einwirken, wobei die Watte während dieser Zeit mit einem Glasschälchen abgedeckt wird. Nach Entfernen des Wattebauschs wird 35 Minuten abgelüftet und anschließend bewertet (Benotung 0 bis 5 entsprechend DIN 53 230).

Die Prüfergebnisse sind in Tabelle 2 zusammengefaßt. Die pigmentierten Lacke der Beispiele 1 bis 7 und der Vergleichsbeispiele 8 bis 12 ergeben hochglänzende glatte Lackschichten. Aus Tabelle 2 geht eindeutig hervor, daß die erfindungsgemäßen Lackmischungen ohne Katalysatorzugabe sehr rasch zu harten, kratzfesten Filmen hoher Elastizität und hervorragender Superbenzinbeständigkeit aushärten und gleichzeitig verarbeitungsgerechte Topfzeiten ergeben. Weiterhin zeigen die erfindungsgemäßen Lacke für den Einsatz auf dem Automobilreparatursektor interessante relativ hohe Festkörpergehalte. Die Vergleichsbeispiele 8, 9 und 11 führen einerseits zwar zu ebenso harten, teilweise kratzfesten, andererseits jedoch viel zu spröden Lackschichten, in einem Fall (Vergleichsbeispiel 9) sogar geringerer Superbenzinfestigkeit. Die stark katalysierten Lackmischungen der Vergleichsbeispiele 10 und 12 ergeben zum Teil deutlich elastischere Schichten bei gleicher Härte und guter Kratzfestigkeit, jedoch liegen sowohl die Elastizität als auch die Benzinbeständigkeit der Filme immer noch wesentlich unter dem Niveau der erfindungsgemäßen Überzüge. Die katalysierten Lackmischungen zeigen deutlich kürzere Topfzeiten als die erfindungsgemäßen katalysatorfreien Einstellungen. Außerdem liegen die Festkörpergehalte bei Spritzviskosität für die erfindungsgemäßen Beispiele 1 bis 7 zwar niedriger als bei der Kombination aus Polyesterpolyol (C) und Polyisocyanat I (Vergleichsbeispiel 8), aber andererseits deutlich höher als bei den Vergleichsmischungen auf Basis reiner Polyacrylate des Standes der Technik (Vergleichsbeispiele 9 bis 12).

Tabelle 1

| Beispiel Nr.*) | Klarlackmischungen – Eingesetzte Mengen (Teile): Acrylatharzlösung A | B | C | Polyester-Polyollösung A | B | C | Polyisocyanat I | II | III | Eigenschaften der Klarlackfilme – Härtung bei Raumtemperatur: 1 Tag PH (sec) | 7 Tage PH (sec) | KF | ET (mm) | Härtung bei 80°C: 30 min PH (sec) | KF | ET (mm) | 60 min PH (sec) | KF | ET (mm) |
|---|---|---|---|---|---|---|---|---|---|---|---|---|---|---|---|---|---|---|---|
| 1 | 300 | | | 100 | | | 203 | | | 102 | 155 | 0 | 8,7 | 185 | 0 | 5,5 | 195 | 0 | 6,4 |
| 2 | 200 | | | | 200 | | 214 | | | 72 | 150 | 1–2 | 9,0 | 135 | 1 | 9,8 | 147 | 1 | 9,3 |
| 3 | 267 | | | | 133 | | 195 | | | 90 | 157 | 1 | 9,2 | 143 | 0–1 | 9,2 | 155 | 0 | 9,1 |
| 4 | 300 | | | | 100 | | 186 | | | 108 | 170 | 1 | 8,9 | 176 | 0 | 9,0 | 190 | 0 | 8,8 |
| 5 | 300 | | | | | 100 | 160 | | | 130 | 190 | 1 | 4,7 | 205 | 0 | 6,2 | 207 | 0 | 8,5 |
| 6 | 300 | | | | | 100 | 121 | 28 | | 140 | 188 | 0 | 9,2 | 200 | 0 | 8,7 | 204 | 0 | 8,2 |
| 7 | 300 | | | | | 100 | 121 | | 21 | 155 | 200 | 0 | 8,4 | 210 | 0 | 8,6 | 210 | 0 | 8,0 |
| 8 | | | | | | 400 | 163 | | | 110 | 185 | 1 | < 1 | 190 | 0–1 | < 1 | 197 | 0 | 1,8 |
| 9 | | 400 | | | | | 152 | | | 53 | 165 | 3 | 1,1 | 173 | 3 | < 1 | 188 | 2 | 1,4 |
| 10 | siehe Beisp.9, nur mit Katalysatorzusatz**) | | | | | | | | | 95 | 160 | 2 | 9,0 | 170 | 2 | 8,8 | 175 | 1 | 7,9 |
| 11 | | | 400 | | | | 188 | | | 105 | 192 | 1 | < 1 | 195 | 1 | < 1 | 209 | 1 | < 1 |
| 12 | siehe Beisp.11, nur mit Katalysatorzusatz**) | | | | | | | | | 135 | 190 | 1 | < 1 | 200 | 1 | < 1 | 203 | 1 | < 1 |

*) Beispiele 8 bis 12 sind Vergleichsbeispiele

**) Katalysiert mit 24 Teilen 1 %iger Lösung von Dibutylzinndilaurat in n-Butylacetat/37 Teilen 4 %iger Lösung von Calciumoctoat in n-Butylacetat

Abkürzungen :

PH : Pendelhärte nach König (sec) gemäß DIN 53 157

KF : Kratzfestigkeit, Benotung 0-5 gemäß DIN 53 230

ET : Erichsentiefung (mm) gemäß DIN 53 156

Tabelle 2

| Beispiel Nr.*) | pot life**) (h) | Festkörpergehalt bei Spritzviskosität (%)***) | Eigenschaften der Weißlackfilme: Härtung 60 min. bei 80°C | | | | Härtung bei Raumtemperatur: 7 Tage | | | BF (nach 4 Tagen) |
|---|---|---|---|---|---|---|---|---|---|---|
| | | | PH (sec) | KF | ET (mm) | BF | PH (sec) | KF | ET (mm) | |
| 1 | 32 | 60,6 | 142 | 1 | 8,8 | 1 | 133 | 1 | 8,3 | 1 |
| 2 | 28 | 62,8 | 101 | 1 | 10,8 | 2 | 119 | 1 | 8,5 | 0-1 |
| 3 | 36 | 60,9 | 121 | 1 | 8,6 | 2 | 125 | 1 | 8,6 | 1 |
| 4 | 37 | 59,5 | 140 | 1 | 8,5 | 1-2 | 141 | 1 | 8,3 | 0-1 |
| 5 | 26 | 59,7 | 150 | 0 | 6,2 | 0-1 | 145 | 1 | 6,0 | 1-2 |
| 6 | 21 | 60,1 | 162 | 0 | 8,9 | 0 | 162 | 0 | 9,0 | 0 |
| 7 | 22 | 59,9 | 159 | 0 | 8,7 | 0 | 155 | 0 | 8,5 | 0 |
| 8 | 22 | 65,4 | 170 | 0 | < 1 | 0 | 160 | 1-2 | < 1 | 2-3 |
| 9 | 47 | 57,8 | 128 | 2 | < 1 | 2-3 | 116 | 2 | 3,5 | 3 |
| 10 | 12 | 57,8 | 145 | 1 | 4,2 | 2 | 130 | 1-2 | 4,9 | 2-3 |
| 11 | 55 | 57,6 | 170 | 1 | < 1 | 1 | 150 | 1 | < 1 | 2-3 |
| 12 | 18 | 57,6 | 180 | 0-1 | < 1 | 0-1 | 155 | 0 | < 1 | 2 |

*) Beispiele 8-12 sind Vergleichsbeispiele

**) Zeit in Stunden bis zur Gelierung der auf Spritzviskosität eingestellten Lacke

***) Spritzviskosität entspr. 20 sec Auslaufzeit für DIN-Becher 4 bei 23 °C

Abkürzungen :

PH : Pendelhärte nach König (sec) gemäß DIN 53 157

KF : Kratzfestigkeit, Benotung 0-5 gemäß DIN 53 230

ET : Erichsentiefung (mm), gemäß DIN 53 156

BF : Superbenzinfestigkeit

**Patentansprüche**

1. Verfahren zur Herstellung von Überzügen auf der Basis von Umsetzungsprodukten
(A) eines Gemisches aus
(A1) Polyhydroxypolyacrylatharzen aus Estern der Acrylsäure und/oder Methacrylsäure mit monofunktionellen aliphatischen Alkoholen, Monoestern der Acrylsäure und/oder Methacrylsäure mit polyfunktionellen aliphatischen Alkoholen und anderen copolymerisierbaren olefinisch ungesättigten Monomeren und
(A2) in organischen Lösungsmitteln löslichen Polyesterpolyolen
mit
(B) gegebenenfalls teilweise oder vollständig mit CH-, NH- oder OH-aciden Blockierungsmitteln verkappten, Isocyanurat- und gegebenenfalls Biuretgruppen aufweisenden Polyisocyanaten einer Funktionalität zwischen 2, 5 und 6,
dadurch gekennzeichnet, daß man als Polyhydroxypolyacrylatharze (A1) 40 bis 99 Gew.% hydroxylgruppenhaltige Copolymerisate aus
a) 6 bis 70 Gew.% mindestens eines Esters der allgemeinen Formel

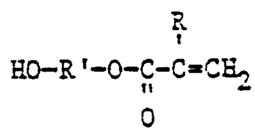

wobei
R für Wasserstoff oder eine Methylgruppe,
R' für einen gerad- oder verzweigtkettigen Alkylenrest mit 2 bis 18 C-Atomen oder einen bis zu drei cycloaliphatische Gruppen enthaltenden Alkylenrest mit 7 bis 17 C-Atomen stehen
b) 0 bis 50 Gew.% eines oder mehrerer Hydroxyalkylester der Acrylsäure und/oder Methacrylsäure der allgemeinen Formel

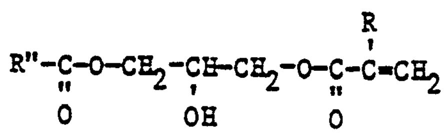

wobei
R für Wasserstoff oder eine Methylgruppe,
R" für den Alkylrest einer verzweigten aliphatischen Carbonsäure mit 4 bis 26 C-Atomen stehen,
c) 10 bis 50 Gew.% mindestens eines Alkylesters der Acrylsäure und/oder Methacrylsäure, der Homopolymerisate mit Glasübergangstemperaturen von + 5 °C bis + 120 °C bildet,
d) 0 bis 10 Gew.% eines Vinylaromaten,
e) 10 bis 60 Gew.% mindestens eines Alkylesters und/oder bis zu 2 Ethersauerstoffbrücken enthaltenden Alkylglykolesters der Acrylsäure und/oder Methacrylsäure, der Homopolymerisate mit Glasübergangstemperaturen von —80 °C bis + 4,5 °C bildet,
f) 0 bis 10 Gew.% eines Amides der Acrylsäure und/oder Methacrylsäure, das gegebenenfalls am Amidstickstoff einen oder zwei Alkylreste mit 1 bis 8 Kohlenstoffatomen, die gegebenenfalls eine Carbonylgruppe enthalten können, oder einen oder zwei Phenylreste als Substituenten trägt,
g) 1 bis 25 Gew.% mindestens einer polymerisierbaren, olefinisch ungesättigten, heterocyclischen Verbindung der allgemeinen Formeln (I) bis (VIII)

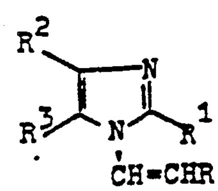

(I)

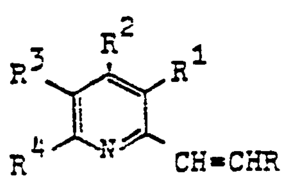

(II)

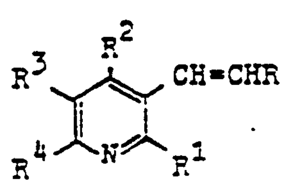

(III)

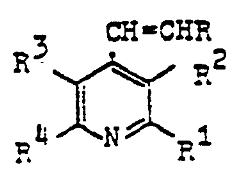

(IV)

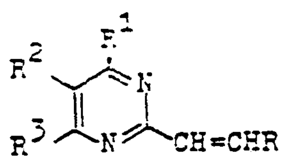

(V)

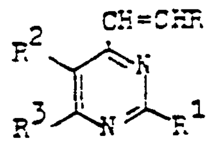

(VI)

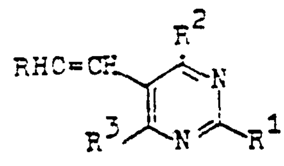

(VII)

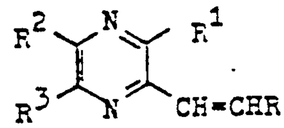

(VIII)

wobei

R für Wasserstoff oder eine Methylgruppe steht,

$R^1$, $R^2$, $R^3$ und $R^4$ untereinander gleich oder verschieden sind und jeweils für Wasserstoff, eine Methyl- oder Ethylgruppe, einen gerad- oder verzweigtkettigen Alkylrest mit 3 bis 4 C-Atomen, einen gegebenenfalls durch eine Alkylgruppe mit 1 bis 4 C-Atomen, durch Halogen oder eine Nitrogruppe substituierten Phenylrest, eine Gruppe der allgemeinen Formel $—R^I—A—R^{II}$

worin

A Sauerstoff oder Schwefel,

$R^I$ eine Methylen-, Ethylen- oder gegebenenfalls durch eine Alkylgruppe mit 1 bis 4 C-Atomen, durch Halogen oder eine Nitrogruppe substituierte Phenylengruppe und

$R^{II}$ eine Methyl-, Ethyl- oder gegebenenfalls durch eine Alkylgruppe mit 1 bis 4 C-Atomen, durch Halogen oder eine Nitrogruppe substituierte Phenylgruppe bedeuten, eine Halogen- oder Nitrogruppe, sowie eine Gruppe der allgemeinen Formeln $—OR^{III}$, $—COOR^{III}$, $—SO_2R^{III}$, $—CONR^{III}R^{IV}$ oder $—SO_2NR^{III}R^{IV}$,

worin

$R^{III}$ und $R^{IV}$ untereinander gleich oder verschieden sind und jeweils eine Methyl- oder Ethylgruppe, einen gerad- oder verzweigtkettigen Alkylrest mit 3 bis 4 C-Atomen oder einen gegebenenfalls durch eine Alkylgruppe mit 1 bis 4 C-Atomen, durch Halogen oder eine Nitrogruppe substituierten Phenylrest bedeuten, stehen

und außerdem in den Formeln (I), (II), (III), (V), (VI) und (VIII) $R^2$ und $R^3$ oder in der Formel (III) $R^3$ und $R^4$, in den Formeln (II) und (IV) $R^3$ und $R^4$ oder $R^1$ und $R^2$, sowie in den Formeln (II) und (IV) sowohl $R^3$ und $R^4$ als auch $R^1$ und $R^2$ gemeinsam mit dem Heterocyclus einen anellierten, gegebenenfalls durch eine Alkylgruppe mit 1 bis 4 C-Atomen, durch Halogen oder eine Nitrogruppe substituierten aromatischen Sechsring bilden können,

h) 0 bis 20 Gew.% unter (a) bis (g) nicht genannter Monomerer, deren einpolymerisierte Reste gegenüber Isocyanatgruppen inert sind,

mit der Maßgabe, daß die Summe der unter (a) und (b) genannten Prozentzahlen 6 bis 70, die Summe der unter (c), (d) und (g) genannten Prozentzahlen 11 bis 60 und die Summe der Prozentzahlen der unter (a) bis (h) genannten Komponenten 100 beträgt, als Polyesterpolyole (A2) 1 bis 60 Gew.% in üblichen gegenüber Isocyanaten inerten Lacklösungsmitteln oder Lacklösungsmittelgemischen, die im wesentlichen eine oder mehrere aromatische und/oder Halogen- und/oder Ether- und/oder Ester- und/oder Ketogruppen enthalten, lösliche, Hydroxylgruppen aufweisende Polyester mit Hydroxylzahlen zwischen 30 und 500 sowie Säurezahlen zwischen 0 und 30, wobei diese Polyesterpolyole (A2) noch bis zu 10 Gew.% polyfunktionelle Alkohole mit Molekulargewichten von 62 bis 300 enthalten können,

mit der Maßgabe, daß die Summe der unter (A1) und (A2) genannten Prozentzahlen 100 beträgt und als Isocyanuratgruppen und gegebenenfalls Biuretgruppen aufweisende Polyisocyanate (B) einer Funktionalität zwischen 2, 5 und 6 (B1) 60 bis 100 Gew.% solcher Polyisocyanate, die Isocyanuratgruppen und vorwiegend cycloaliphatisch gebundene Isocyanatgruppen aufweisen und (B2) 0 bis 40 Gew.% Biuretgruppen und/oder Isocyanuratgruppen enthaltender Polyisocyanate mit vorwiegend aliphatisch gebundenen Isocyanatgruppen, mit der Maßgabe, daß die Summe der unter (B1) und (B2) genannten Prozentzahlen 100 beträgt, einsetzt.

2. Verfahren gemäß Anspruch 1, dadurch gekennzeichnet, daß man als cycloaliphatisches isocyanuratgruppenhaltiges Polyisocyanat (B1) ein aus 3-Isocyanatomethyl-3,5,5-trimethyl-cyclohexylisocyanat (= Isophorondiisocyanat) als monomeren Diisocyanat erhaltenes Produkt verwendet.

3. Verfahren nach Anspruch 1, dadurch gekennzeichnet, daß man als isocyanuratgruppenhaltiges Polyisocyanat (B1) mit vorwiegend cycloaliphatisch gebundenen Isocyanatgruppen ein Produkt verwendet, welches 60 bis 99 Gew.% Isophorondiisocyanat und 1 bis 40 Gew.% Hexamethylendiisocyanat eingebaut enthält.

4. Verfahren nach Anspruch 3, dadurch gekennzeichnet, daß man ein Polyisocyanat (B1) verwendet, welches 70-98 Gew.% Isophorondiisocyanat und 2 bis 30 Gew.% Hexamethylendiisocyanat eingebaut enthält.

5. Verfahren nach Anspruch 1 bis 3, dadurch gekennzeichnet, daß man als biuretgruppenhaltiges Polyisocyanat (B2) mit vorwiegend aliphatisch gebundenen Isocyanatgruppen ein aus Hexamethylendiisocyanat als monomerem Diisocyanat erhaltenes Produkt verwendet.

6. Verfahren nach einem der Ansprüche 1 bis 3, dadurch gekennzeichnet, daß man als isocyanuratgruppenhaltiges Polyisocyanat (B2) mit vorwiegend aliphatisch gebundenen Isocyanatgruppen ein aus Hexamethylendiisocyanat als monomerem Diisocyanat erhaltenes Produkt verwendet.

7. Verfahren nach Anspruch 1 oder 2, dadurch gekennzeichnet, daß die Hydroxylzahlen der hydroxylgruppenhaltigen Copolymerisate (A1) zwischen 30 und 250 liegen.

8. Verfahren nach einem der vorhergehenden Ansprüche, dadurch gekennzeichnet, daß die Hydroxylzahlen der hydroxylgruppenhaltigen Copolymerisate (A1) zwischen 50 und 150 liegen.

9. Verfahren nach einem der vorhergehenden Ansprüche, dadurch gekennzeichnet, daß als Komponente (a) des hydroxylgruppenhaltigen Copolymerisates Hydroxyethylacrylat und/oder -methacrylat eingesetzt werden.

10. Verfahren nach einem der vorhergehenden Ansprüche, dadurch gekennzeichnet, daß als Komponente (a) des hydroxylgruppenhaltigen Copolymerisates Butandiol-1,4- und/oder Hexandiol-1,6-monoacrylat und/oder -monomethacrylat eingesetzt werden.

11. Verfahren nach einem der vorhergehenden Ansprüche, dadurch gekennzeichnet, daß als Komponente (g) des hydroxylgruppenhaltigen Copolymerisats mindestens ein N-Vinylimidazol der Formel (Ia)

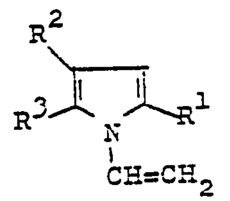

(Ia)

wobei $R^1$, $R^2$ und $R^3$ jeweils für Wasserstoff, eine Methyl- und Ethylgruppe, einen gerad- oder verzweigtkettigen Alkylrest mit 3 bis 4 C-Atomen und einen gegebenenfalls durch eine Alkylgruppe mit 1 bis 4 C-Atomen, durch Halogen oder eine Nitrogruppe substituierten Phenylrest stehen und außerdem $R^2$ und $R^3$ gemeinsam mit dem Heterocyclus einen anellierten gegebenenfalls durch eine Alkylgruppe mit 1 bis 4 C-Atomen, durch Halogen oder eine Nitrogruppe substituierten aromatischen Sechsring bilden können, eingesetzt werden.

12. Verfahren nach Anspruch 11, dadurch gekennzeichnet, daß für das hydroxylgruppenhaltige Copolymerisat 2 bis 20 Gew.% der Komponente (g) eingesetzt werden.

13. Verfahren nach einem der Ansprüche 1 bis 11, dadurch gekennzeichnet, daß als Komponente (g) des hydroxylgruppenhaltigen Copolymerisats mindestens eine Vinylverbindung der allgemeinen Formeln

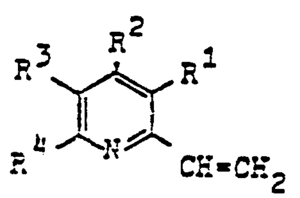

(IIa)

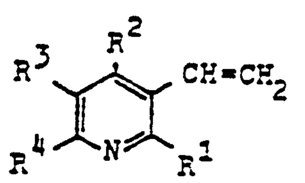

(IIIa)

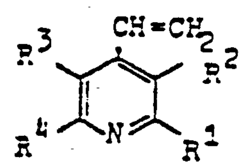

(IVa)

wobei $R^1$, $R^2$, $R^3$ und $R^4$ jeweils die gleiche Bedeutung wie $R^1$, $R^2$ und $R^3$ in der Formel (Ia) des Anspruchs 11 haben und außerdem jeweils $R^3$ und $R^4$ oder $R^2$ und $R^3$ in den Formeln (IIa) und (IIIa) oder $R^1$ und $R^2$ sowie $R^3$ und $R^4$ gleichzeitig in Formel (IVa) gemeinsam mit dem Heterocyclus einen anellierten gegebenenfalls durch eine Alkylgruppe mit 1 bis 4 C-Atomen, durch Halogen oder eine Nitrogruppe substituierten aromatischen Sechsring bilden können, eingesetzt wird.

14. Verfahren nach Anspruch 13, dadurch gekennzeichnet, daß als Komponente (g) des hydroxylgruppenhaltigen Copolymerisates 4-Vinylpyridin eingesetzt wird.

15. Verfahren nach einem der Ansprüche 13 und 14, dadurch gekennzeichnet, daß für das hydroxylgruppenhaltige Copolymerisat 2 bis 20 Gew.% der Komponente (g) eingesetzt werden.

16. Verfahren nach einem der vorhergehenden Ansprüche, dadurch gekennzeichnet, daß die Hydroxylzahlen der löslichen Polyesterpolyole (A2) zwischen 50 und 400 liegen.

17. Verfahren nach einem der vorhergehenden Ansprüche, dadurch gekennzeichnet, daß die Säurezahlen der löslichen Polyesterpolyole (A2) zwischen 0 und 15 liegen.

18. Verfahren nach einem der vorhergehenden Ansprüche, dadurch gekennzeichnet, daß die löslichen Polyesterpolyole (A2) in Anteilen von 5 bis 55 Gew.%, bezogen auf die Gesamtmenge der Polyole (A), eingesetzt werden.

19. Verfahren nach einem der vorhergehenden Ansprüche, dadurch gekennzeichnet, daß als Komponente (A2) verzweigte Polyesterole eingesetzt werden.

20. Verfahren nach einem der vorhergehenden Ansprüche, dadurch gekennzeichnet, daß die Hydroxylzahlen des Polyolgemisches (A) zwischen 30 und 250 liegen.

21. Verfahren nach einem der vorhergehenden Ansprüche, dadurch gekennzeichnet, daß die Hydroxylzahlen des Polyolgemisches (A) zwischen 50 und 170 liegen.

22. Verfahren nach einem der vorhergehenden Ansprüche, dadurch gekennzeichnet, daß man die Mengenverhältnisse der Reaktionskomponenten (A) und (B) so wählt, daß das Äquivalentverhältnis von gegebenenfalls teilweise oder vollständig mit CH-, NH- oder OH-aciden Blockierungsmitteln verkappten Isocyanatgruppen zu reaktionsfähigen Hydroxylgruppen zwischen 0,25 : 1 und 4 : 1 liegt.

23. Verfahren nach einem der vorhergehenden Ansprüche, dadurch gekennzeichnet, daß als Blockierungsmittel für das gegebenenfalls teilweise oder vollständig verkappte Polyisocyanat ein monofunktionelles Ketoxim eingesetzt wird.

24. Verfahren nach einem der vorhergehenden Ansprüche, dadurch gekennzeichnet, daß als Blockierungsmittel für das Polyisocyanat Dimethylketoxim oder Methylethylketoxim verwendet wird.

25. Metallteil, das nach einem Verfahren gemäß einem der vorhergehenden Ansprüche mit einem Überzug versehen ist.

## Claims

1. A process for the production of a coating based on a reaction product of

(A) a mixture of

(A1) a polyhydroxypolyacrylate resin obtained from an ester of acrylic acid and/or methacrylic acid with a monofunctional aliphatic alcohol, a monoester of acrylic acid and/or methacrylic acid with a polyfunctional aliphatic alcohol, and other copolymerizable olefinically unsaturated monomers, and

(A2) a polyesterpolyol which is soluble in organic solvents

with

(B) a polyisocyanate which is unblocked or partially or completely blocked with CH-, NH- or OH-acidic blocking agents, contains isocyanurate groups and may or may not contain biuret groups and has a functionality of from 2.5 to 6,

wherein the polyhydroxypolyacrylate resin (A1) used comprises from 40 to 99 % by weight of hydroxyl-containing copolymers consisting of

a) from 6 to 70 % by weight of one or more esters of the general formula

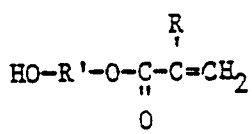

where

R is hydrogen or methyl, and

R′ is a straight-chain or branched alkylene radical of 2 to 18 carbon atoms or alkylene of 7 to 17 carbon atoms which contains one, two or three cycloaliphatic groups,

b) from 0 to 50 % by weight of one or more hydroxyalkyl esters of acrylic acid and/or methacrylic acid of the general formula

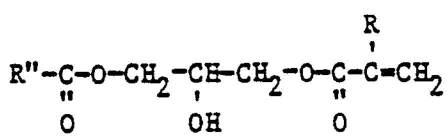

where

R is hydrogen or methyl, and

R″ is the alkyl radical of a branched aliphatic carboxylic acid of 4 to 26 carbon atoms,

c) from 10 to 50 % by weight of one or more alkyl esters of acrylic acid and/or methacrylic acid, which form homopolymers having a glass transition temperature of from + 5 to + 120 °C,

d) from 0 to 10 % by weight of a vinylaromatic,

e) from 10 to 60 % by weight of one or more alkyl esters or alkylglycol esters of acrylic acid and/or methacrylic acid, which form homopolymers which have a glass transition temperature of from — 80 to + 4.5 °C, the alkylglycol esters containing up to 2 ether oxygen bridges,

f) from 0 to 10 % by weight of an acrylamide and/or a methacrylamide which may or may not be substituted at the amide nitrogen atom by one or two alkyl radicals of 1 to 8 carbon atoms which may or may not certain a carbonyl group, or by one or two phenyl radicals,

g) from 1 to 25 % by weight of one or more polymerizable olefinically unsaturated heterocyclic compounds of the general formulae (I) to (VIII)

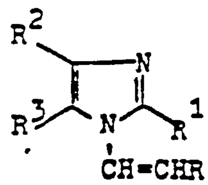

(I)

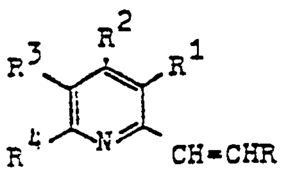

(II)

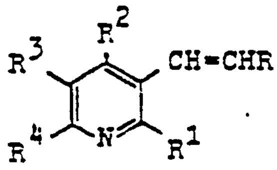

(III)

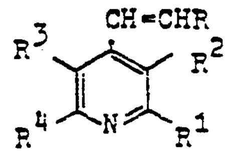

(IV)

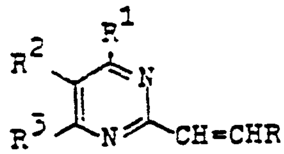

(V)

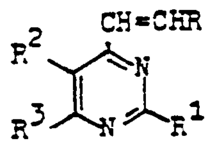

(VI)

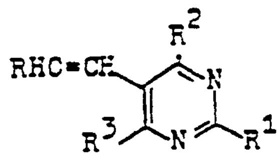

(VII)

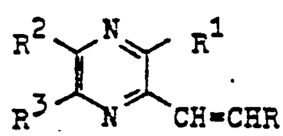

(VIII)

where

R is hydrogen or methyl,

$R^1$, $R^2$, $R^3$ and $R^4$ are identical or different and are each hydrogen, methyl, ethyl, a straight-chain or branched alkyl radical of 3 or 4 carbon atoms, or phenyl which is unsubstituted or substituted by alkyl of 1 to 4 carbon atoms, halogen or nitro, or are each a group of the general formula $—R^I—A—R^{II}$,

where

A is oxygen or sulfur,

$R^I$ is methylene or ethylene or is phenylene which is unsubstituted or substituted by alkyl of 1 to 4 carbon atoms or by halogen or nitro, and

$R^{II}$ is methyl or ethyl or is phenyl which is unsubstituted or substituted by alkyl of 1 to 4 carbon atoms or by halogen or nitro, or are each halogen or nitro, or a group of the general formulae $—OR^{III}$, $—COOR^{III}$, $—SO_2R^{III}$, $—CONR^{III}R^{IV}$ or $—SO_2NR^{III}R^{IV}$,

where

$R^{III}$ and $R^{IV}$ are identical or different and are each methyl, ethyl, a straight-chain or branched alkyl radical of 3 or 4 carbon atoms, or phenyl which is unsubstituted or substituted by alkyl of 1 to 4 carbon atoms or by halogen or nitro,

and furthermore in the formulae (I), (II), (III), (IV), (V), (VI) and (VIII) $R^2$ and $R^3$, or in the formula (III) $R^3$ and $R^4$, or in the formulae (II) and (IV) $R^3$ and $R^4$ or $R^1$ and $R^2$, or in the formulae (II) and (IV) not only $R^3$ and $R^4$ but also $R^1$ and $R^2$, together with the heterocyclic ring, can form a fused aromatic six-membered ring which is unsubstituted or substituted by alkyl of 1 to 4 carbon atoms or by halogen or nitro, and

h) from 0 to 20 % by weight of monomers which are not specified under (a) to (g) and whose copolymerized radicals are inert to isocyanate groups,

with the proviso that the sum of the percentages specified under (a) and (b) is from 6 to 70, the sum of the percentages specified under (c), (d) and (g) is from 11 to 60, and the sum of the percentages of the components specified under (a) to (h) is 100, the polyesterpolyol (A2) used comprises from 1 to 60 % by weight of a hydroxyl-containing polyester which has a hydroxyl number of from 30 to 500 and an acid number of from 0 to 30 and is soluble in conventional surface coating solvents or solvent mixtures which are inert to isocyanates and essentially contain one or more aromatic, halogen, ether, ester or keto

groups, or several different groups from amongst these, and this polyesterpolyol (A2) can also contain up to 10 % by weight of a polyfunctional alcohol having a molecular weight from 62 to 300,
with the proviso that the sum of the percentages specified under (A1) and (A2) is 100, and the polyisocyanate (B) used, which contains isocyanurate groups, may or may not contain biuret groups and has a functionality of from 2.5 to 6, comprises (B1) from 60 to 100 % by weight of an isocyanurate-containing polyisocyanate which possesses predominantly cycloaliphatically bonded isocyanate groups, and (B2) from 0 to 40 % by weight of a polyisocyanate which contains biuret or isocyanurate groups or both biuret and isocyanurate groups and possesses predominantly aliphatically bonded isocyanate groups, with the proviso that the sum of the percentages specified under (B1) and (B2) is 100.

2. A process as claimed in claim 1, wherein the cycloaliphatic isocyanurate-containing polyisocyanate (B1) used is a product obtained from 3-isocyanatomethyl-3,5,5-trimethylcyclohexyl isocyanate (isophorone diisocyanate) as the diisocyanate monomer.

3. A process as claimed in claim 1, wherein a product which contains, as copolymerized units, from 60 to 99 % by weight of isophorone diisocyanate and from 1 to 40 % by weight of hexamethylene diisocyanate is used as the isocyanurate-containing polyisocyanate (B1) possessing predominantly cycloaliphatically bonded isocyanate groups.

4. A process as claimed in claim 3, wherein the polyisocyanate (B1) used contains, as copolymerized units, from 70 to 98 % by weight of isophorone diisocyanate and from 2 to 30 % by weight of hexamethylene diisocyanate.

5. A process as claimed in claims 1 to 3, wherein a product obtained from hexamethylene diisocyanate, as the diisocyanate monomer, is used as the polyisocyanate (B2) which contains biuret groups and possesses predominantly aliphatically bonded isocyanate groups.

6. A process as claimed in any of claims 1 to 3, wherein a product obtained from hexamethylene diisocyanate, as the diisocyanate monomer, is used as the isocyanurate-containing polyisocyanate (B2) possessing predominantly aliphatically bonded isocyanate groups.

7. A process as claimed in claim 1 or 2, wherein the hydroxyl number of the hydroxyl-containing copolymer (A1) is from 30 to 250.

8. A process as claimed in any of the preceding claims, wherein the hydroxyl number of the hydroxyl-containing copolymer (A1) is from 50 to 150.

9. A process as claimed in any of the preceding claims, wherein hydroxyethyl acrylate or methacrylate, or a mixture of hydroxyethyl acrylate and hydroxyethyl methacrylate, is used as component (a) of the hydroxyl-containing copolymer.

10. A process as claimed in any of the preceding claims, wherein one or more of the compounds butane-1,4-diol monoacrylate, butane-1,4-diol monomethacrylate, hexane-1,6-diol monoacrylate and hexane-1,6-diol monomethacrylate are used as component (a) of the hydroxyl-containing copolymer.

11. A process as claimed in any of the preceding claims, wherein one or more N-vinylimidazoles of the formula (Ia)

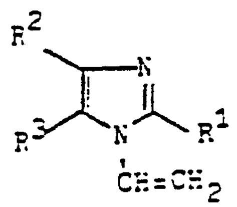

(Ia)

where $R^1$, $R^2$ and $R^3$ are each hydrogen, methyl, ethyl, a straight-chain or branched alkyl radical of 3 or 4 carbon atoms, or phenyl which is unsubstituted or substituted by alkyl of 1 to 4 carbon atoms or by halogen or nitro, or $R^2$ and $R^3$, together with the heterocyclic ring, furthermore can form a fused aromatic six-membered ring which is unsubstituted or substituted by alkyl or 1 to 4 carbon atoms or by halogen or nitro, are used as component (g) of the hydroxyl-containing copolymer.

12. A process as claimed in claim 11, wherein from 2 to 20 % by weight of component (g) is used for the hydroxyl-containing copolymer.

13. A process as claimed in any of claims 1 to 11, wherein one or more vinyl compounds of the general formulae

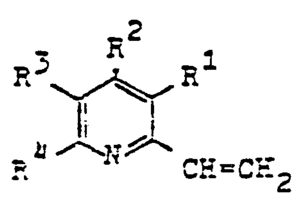

(IIa)

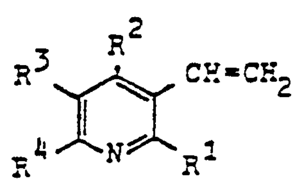

(IIIa)

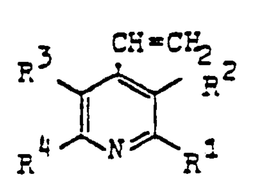

(IVa)

where $R^1$, $R^2$, $R^3$ and $R^4$ each have the same meanings as $R^1$, $R^2$ and $R^3$ in formula (Ia) of claim 11, and furthermore $R^3$ and $R^4$, or $R^2$ and $R^3$, in the formulae (IIa) and (IIIa), or $R^1$ and $R^2$ as well as $R^3$ and $R^4$ in formula (IVa), together with the heterocyclic ring, can form a fused aromatic 6-membered ring which is unsubstituted or substituted by alkyl of 1 to 4 carbon atoms or by halogen or nitro, are used as component (g) of the hydroxyl-containing copolymer.

14. A process as claimed in claim 13, wherein 4-vinylpyridine is used as component (g) of the hydroxyl-containing copolymer.

15. A process as claimed in claim 13 or 14, wherein from 2 to 20 % by weight of component (g) is used for the hydroxyl-containing copolymer.

16. A process as claimed in any of the preceding claims, wherein the hydroxyl number of the soluble polyesterpolyol (A2) is from 50 to 400.

17. A process as claimed in any of the preceding claims, wherein the acid number of the soluble polyesterpolyol (A2) is from 0 to 15.

18. A process as claimed in any of the preceding claims, wherein the soluble polyesterpolyol (A2) is used in an amount of from 5 to 55 % by weight, based on the total amount of the polyol (A).

19. A process as claimed in any of the preceding claims, wherein a branched polyesterol is used as component (A2).

20. A process as claimed in any of the preceding claims, wherein the hydroxyl number of the polyol mixture (A) is from 30 to 250.

21. A process as claimed in any of the preceding claims, wherein the hydroxyl number of the polyol mixture (A) is from 50 to 170.

22. A process as claimed in any of the preceding claims, wherein the ratio of the reactants (A) and (B) is so chosen that the ratio of the number of equivalents of isocyanate groups which are unblocked or partially or completely blocked with CH-, NH- or OH-acidic blocking agents to the number of equivalents of reactive hydroxyl groups is from 0.25 : 1 to 4 : 1.

23. A process as claimed in any of the preceding claims, wherein a monofunctional ketoxime is used as the blocking agent for the partially or completely blocked polyisocyanate.

24. A process as claimed in any of the preceding claims, wherein dimethyl ketoxime or methyl ethyl ketoxime is used as the blocking agent for the polyisocyanate.

25. A metal part provided with a coating by a process as claimed in any of the preceding claims.

**Revendications**

1. Procédé de fabrication de revêtements à base de produits de réaction

(A) d'un mélange de

(A1) résines polyhydroxypolyacrylates d'esters d'acide acrylique et/ou acide méthacrylique et d'alcools aliphatiques monofonctionnels, monoesters d'acide acrylique et/ou méthacrylique et d'alcools aliphatiques polyfonctionnels et autres monomères insaturés oléfiniquement, copolymérisables et

(A2) polyesterpolyols solubles dans des solvants organiques avec

(B) des polyisocyanates, d'une fonctionnalité comprise entre 2, 5 et 6, possédant des groupes isocyanurate, et éventuellement biuret, masqués éventuellement, partiellement ou totalement, avec des agents de blocage CH-, NH- ou OH-acides,

caractérisé par le fait que l'on met en œuvre, comme résine polyhydroxypolyacrylate (A1), 40 à 99 % en poids de copolymérisats à groupe hydroxyle de

a) 6 à 70 % en poids d'au moins un ester de formule générale

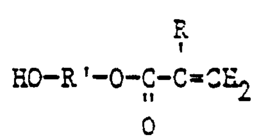

où

R représente hydrogène ou un groupe méthyle

R' représente un reste alkylène, droit ou ramifié, ayant 2 à 18 atomes C ou un reste alkylène de 7 à 17 atomes C contenant jusqu'à trois groupes cycloaliphatiques

b) 0 à 50 % en poids d'un ou plusieurs esters hydroxyalkyliques de l'acide acrylique et/ou acide méthacrylique de formule générale

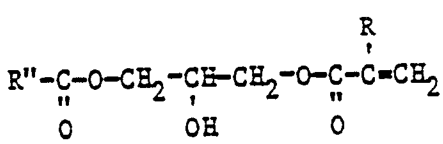

où

R représente hydrogène ou un groupe méthyle

R" est mis pour le reste alkyle d'un acide carboxylique aliphatique ramifié, ayant 4 à 26 atomes C,

c) 10 à 50 % en poids d'au moins un ester alkylique de l'acide acrylique et/ou acide méthacrylique qui forme des homopolymérisats d'une température de transition vitreuse de + 5 à + 120 °C,

d) 0 à 10 % en poids d'un aromate vinylique,

e) 10 à 60 % d'au moins un ester alkylique et/ou ester alkylglycolique, contenant jusqu'à 2 ponts éther-oxygène, de l'acide acrylique et/ou acide méthacrylique, qui forme des homopolymérisats d'une température de transition vitreuse de — 80 °C à + 4,5 °C,

f) 0 à 10 % en poids d'un amide de l'acide acrylique et/ou acide méthacrylique qui porte éventuellement, comme substituants sur l'azote d'amide, un ou deux restes alkyle de 1 à 8 atomes de carbone, pouvant contenir éventuellement un groupe carbonyle, ou un ou deux restes phényle,

g) 1 à 25 % en poids d'au moins un composé hétérocyclique, insaturé oléfiniquement, polymérisable, de formules générales (I) à (VIII)

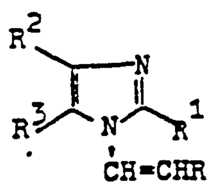

(I)

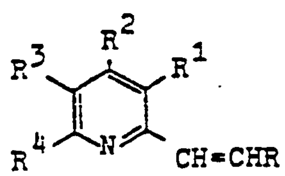

(II)

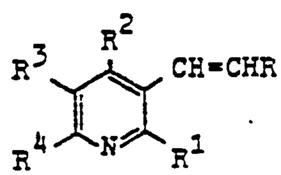

(III)

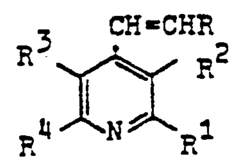

(IV)

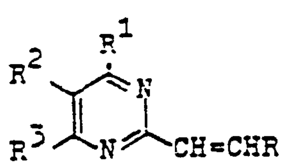

(V)

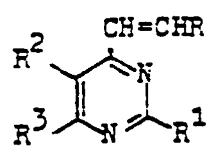

(VI)

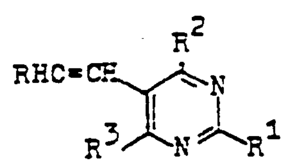

(VII)

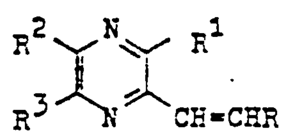

(VIII)

dans lesquelles

$R_1$ est mis pour hydrogène ou un groupe méthyle,

$R^1$, $R^2$, $R^3$ et $R^4$ sont identiques ou différents les uns des autres et représentent, chacun, hydrogène, un groupe méthyle ou éthyle, un reste alkyle droit ou ramifié de 3 à 4 atomes C, un reste phényle éventuellement substitué par un groupe alkyle de 1 à 4 atomes C, par halogène ou un groupe nitro, un groupe de formule générale $—R^I—A—R^{II}$

où

A représente oxygène ou soufre

$R^I$ un groupe méthylène, éthylène ou phénylène éventuellement substitué par un groupe alkyle de 1 à 4 atomes, C, par halogène ou un groupe nitro, et

$R^{II}$ un groupe méthyle, éthyle ou un groupe phényle, un groupe halogène ou nitro, ainsi qu'un groupe de formules générales $—OR^{III}$, $—COOR^{III}$, $—SO_2R^{III}$, $—CONR^{III}R^{IV}$ ou $—SO_2NR^{III}R^{IV}$,

où

$R^{III}$ et $R^{IV}$ sont identiques ou différents les uns des autres et représentent chacun un groupe méthyle

ou éthyle, un reste alkyle droit ou ramifié de 3 à 4 atomes C, ou un reste phényle, éventuellement substitué par un groupe alkyle de 1 à 4 atomes C, par halogène ou un groupe nitro et, en outre, dans les formules (I), (II), (III), (V), (VI) et (VIII), $R^2$ et $R^3$ ou, dans la formule (III), $R^3$ et $R^4$, dans les formules (II) et (IV), $R^3$ et $R^4$ ou $R^1$ et $R^2$, ainsi que dans les formules (II) et (IV) aussi bien $R^3$ et $R^4$ que $R^1$ et $R^2$, ensemble avec l'hétérocycle, peuvent former un noyau hexagonal, aromatique, condensé, éventuellement substitué par un groupe alkyle de 1 à 4 atomes C, par halogène ou un groupe nitro,

h) 0 à 20 % en poids de monomères non indiqués sous (a) à (g), dont les restes entrés en polymérisation sont inertes par rapport aux groupes isocyanate,

sous réserve que la somme des pourcentages indiqués sous (a) et (b) soit de 6 à 70, la somme des pourcentages indiqués sous (c) (d) et (g) soit de 11 à 60, la somme des pourcentages des composants indiqués sous (a) à (h) soit 100, que, comme polyesterpolyols (A2), 1 à 60 % en poids de polyesters à groupes hydroxyle solubles dans des solvants ou mélanges de solvants pour laque, usuels, inertes vis-à-vis des isocyanates, et qui contiennent, en principe, un ou plusieurs groupes aromatiques et/ou halogène, et/ou éther, et/ou ester, et/ou céto, et à indice hydroxyle compris entre 30 et 500 ainsi qu'un indice d'acide compris entre 0 et 30, ces polyesterpolyols (A2) pouvant encore contenir jusqu'à 10 % en poids d'alcools polyfonctionnels de poids moléculaires compris entre 62 et 300,

sous réserve que la somme des pourcentages indiqués sous (A1) et (A2) soit de 100 et, comme polyisocyanates (B) possédant des groupes isocyanurate et éventuellement biuret, d'une fonctionnalité comprise entre 2, 5 et 6 (B1) 60 à 100 % en poids de ces polyisocyanates qui possèdent des groupes isocyanate et surtout des groupes isocyanate liés cycloaliphatiquement et (B2) 0 à 40 % en poids de polyisocyanates contenant des groupes biuret et/ou des groupes isocyanurate avec surtout des groupes isocyanate liés aliphatiquement, sous réserve que la somme des pourcentages indiqués sous (B1) et (B2) soit de 100.

2. Procédé selon la revendication 1, caractérisé par le fait que l'on utilise, comme polyisocyanate (B1) aliphatique, à groupes isocyanurate, un produit obtenu à partir de 3-isocyanatométhyl-3,5,5-triméthyl-cyclohexylisocyanate(= isophorondi-isocyanate), comme diisocyanate monomère.

3. Procédé selon la revendication 1, caractérisé par le fait que l'on utilise, comme polyisocyanate (B1), à groupes isocyanurate, avec surtout des groupes isocyanate liés aliphatiquement, un produit qui contient, incorporés, 60 à 99 % en poids d'isophorondiisocyanate et 1 à 40 % en poids d'hexaméthylène diisocyanate.

4. Procédé selon la revendication 3, caractérisé par le fait que l'on utilise un polyisocyanate (B1) qui contient, incorporés, 70 à 98 % en poids d'isophorondiisocyanate et 2 à 30 % en poids d'hexaméthylène-diisocyanate.

5. Procédé selon la revendication 1 à 3, caractérisé par le fait que l'on utilise comme polyisocyanate (B2) à groupes biuret et groupes isocyanate surtout liés aliphatiquement, un produit obtenu à partir d'hexaméthylènediisocyanate comme diisocyanate monomère.

6. Procédé selon l'une des revendications 1 à 3, caractérisé par le fait que l'on utilise, comme polyisocyanate (B2) à groupes isocyanurate et groupes isocyanate surtout liés aliphatiquement, un produit obtenu à partir d'hexaméthylènediisocyanate comme diisocyanate monomère.

7. Procédé selon la revendication 1 ou 2, caractérisé par le fait que l'indice d'hydroxyle du copolymérisat (A1) à groupes hydroxyle est compris entre 30 et 250.

8. Procédé selon l'une des revendications précédentes, caractérisé par le fait que l'indice d'hydroxyle du copolymérisat (A1) à groupes hydroxyle est compris entre 50 et 150.

9. Procédé selon l'une des revendications précédentes, caractérisé par le fait que, comme composants (a) du copolymérisat (A1) à groupes hydroxyle, on utilise de l'acrylate et/ou méthacrylate d'hydroxyéthyle.

10. Procédé selon l'une des revendications précédentes, caractérisé par le fait que, comme composants (a) du copolymérisat à groupes hydroxyle, on utilise du monoacrylate et/ou monométhacrylate de butanediol-1,4 et/ou hexanediol-1,6.

11. Procédé selon l'une des revendications précédentes, caractérisé par le fait que, comme composants (g) du copolymérisat à groupes hydroxyle, on utilise au moins un N-vinylimidazole de formule (Ia)

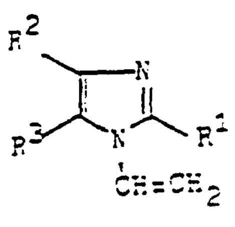

(Ia)

où $R^1$, $R^2$ et $R^3$ représentent, chacun, hydrogène, un groupe méthyle ou éthyle, un reste alkyle droit ou ramifié de 3 à 4 atomes C, un reste phényle éventuellement substitué par un groupe alkyle de 1 à 4 atomes C, par halogène ou un groupe nitro et, en outre, $R^2$ et $R^3$, ensemble avec l'hétérocycle, peuvent former un noyau hexagonal, aromatique, condensé, éventuellement substitué par un groupe alkyle de 1 à 4 atomes C, par halogène ou un groupe nitro.

12. Procédé selon la revendication 11, caractérisé par le fait que, pour le copolymérisat à groupes hydroxyle, on met en œuvre 2 à 20 % en poids du composant (g).

13. Procédé selon l'une des revendications 1 à 11, caractérisé par le fait que, comme composant (g) du copolymérisat à groupes hydroxyle, on met en œuvre au moins un composé de formules générales

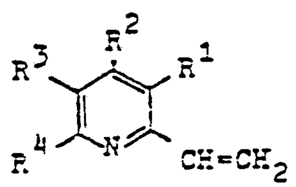
(IIa)

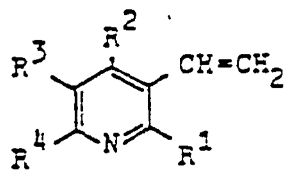
(IIIa)

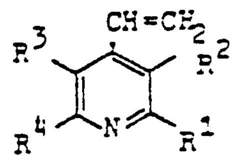
(IVa)

où $R^1$, $R^2$, $R^3$ et $R^4$ ont chacun la même signification qu'ont $R^1$, $R^2$ et $R^3$ dans la formule (Ia) de la revendication 11 et, en outre, chacun $R^3$ et $R^4$ ou $R^2$ et $R^3$ dans les formules (IIa) et (IIIa) ou $R^1$ et $R^2$ ainsi que $R^3$ et $R^4$ simultanément dans la formule (IVa), ensemble avec l'hétérocycle, peuvent former un noyau hexagonal, aromatique, condensé, éventuellement substitué par un groupe alkyle de 1 à 4 atomes C, par halogène ou un groupe nitro.

14. Procédé selon la revendication 13, caractérisé par le fait que, comme composant (g) du copolymérisat à groupes hydroxyle, on utilise de la 4-vinylpyridine.

15. Procédé selon la revendication 13 et 14, caractérisé par le fait que, pour le copolymérisat à groupes hydroxyle, on utilise 2 à 20 % en poids du composant (g).

16. Procédé selon l'une des revendications précédentes, caractérisé par le fait que les indices d'hydroxyle des polyesterpolyols solubles (A2) sont compris entre 50 et 400.

17. Procédé selon l'une des revendications précédentes, caractérisé par le fait que les indices d'acide des polyesterpolyols (A2) sont compris entre 0 et 15.

18. Procédé selon l'une des revendications précédentes, caractérisé par le fait que les polyesterpolyols (A2) solubles sont appliqués en proportions de 5 à 55 % en poids, par rapport à la quantité totale des polyols (A).

19. Procédé selon l'une des revendications précédentes, caractérisé par le fait que, comme composants (A2) sont appliqués des polyesterols ramifiés.

20. Procédé selon l'une des revendications précédentes, caractérisé par le fait que les indices d'hydroxyle du mélange de polyols (A) sont compris entre 30 et 250.

21. Procédé selon l'une des revendications précédentes, caractérisé par le fait que les indices d'hydroxyle du mélange de polyols (A) sont compris entre 50 et 170.

22. Procédé selon l'une des revendications précédentes, caractérisé par le fait qu'on choisit les rapports quantitatifs des composants de réaction (A) et (B) de façon que le rapport d'équivalent entre les groupes isocyanate, masqués éventuellement partiellement ou totalement avec des agents de blocage CH-, NH- ou OH-acides, et les groupes hydroxyle réactifs soit compris entre 0,25/1 et 4/1.

23. Procédé selon l'une des revendications précédentes, caractérisé par le fait que, comme agent de blocage pour le polyisocyanate, éventuellement masqué partiellement ou totalement, on utilise de la cétoxime monofonctionnelle.

24. Procédé selon l'une des revendications précédentes, caractérisé par le fait que, comme agent de blocage pour le polyisocyanate, on utilise la diméthylcétoxime ou la méthyléthylcétoxime.

25. Pièce métallique qui est munie d'un revêtement par un procédé selon l'une des revendications précédentes.